Europäisches Patentamt

(19) European Patent Office    (11) Publication number: **0 041 846**

Office européen des brevets    **B1**

(12)    **EUROPEAN PATENT SPECIFICATION**

(45) Date of publication of patent specification: **15.05.85**    (51) Int. Cl.⁴: **H 02 N 15/02, H 02 K 41/02, H 02 K 29/10**

(21) Application number: **81302504.6**

(22) Date of filing: **05.06.81**

(54) Induction type positioning system.

(30) Priority: **06.06.80 JP 76164/80**

(43) Date of publication of application:
**16.12.81 Bulletin 81/50**

(45) Publication of the grant of the patent:
**15.05.85 Bulletin 85/20**

(84) Designated Contracting States:
**DE FR GB**

(56) References cited:
**DE-A-2 029 462**
**DE-A-2 151 907**
**FR-A-2 171 816**
**FR-A-2 211 791**
**GB-A- 535 871**
**GB-A-1 102 321**
**GB-A-1 373 054**
**GB-A-1 485 304**

**FUJITSU SCIENTIFIC AND TECHNICAL JOURNAL, vol. 16, no. 4, December 1980 Kawasaki, JP KAZUO ASAKAWA et al. "Small conveyor for inter-office transport", pages 37-57**

(73) Proprietor: **FUJITSU LIMITED**
**1015, Kamikodanaka Nakahara-ku**
**Kawasaki-shi Kanagawa 211 (JP)**

(72) Inventor: **Asakawa, Kazuo**
**2-10-1-3-403, Miyamaedaira Takatsu-ku**
**Kawasaki-shi Kanagawa, 211 (JP)**
Inventor: **Miyazaki, Toshimasa**
**2-3-1-102 Fujigaoka Midori-ku**
**Yokohama-shi Kanagawa, 227 (JP)**

(74) Representative: **Sunderland, James Harry et al**
**HASELTINE LAKE & CO Hazlitt House 28**
**Southampton Buildings Chancery Lane**
**London WC2A 1AT (GB)**

## Description

An induction type positioning system is, for example, provided in order to stop a movable part at a specified position and to hold the movable part at that position.

For example, in a positioning system for positioning a movable body such as a linear vehicle a friction brake relying upon mechanical friction generated between a movable part, namely the moveable body, and a guide rail which serves to guide the movable body has been used.

However a system of this type suffers from the following problems.

1. A complicated braking mechanism providing a friction plate is necessary.
2. A stop position of the movable part may change due to changes in the frictional effect of the friction plate.
3. Frictional heating has an adverse effect upon mechanical parts.
4. Friction results in smell, smoke and noise.

These problems arise because the stop position is determined by the frictional force provided through mechanical contact between the movable part and the guide rail. In particular, such problems represent a considerable inconvenience militating against employment of such a system in office equipment.

In an effort to overcome these problems at least in part it has been proposed to determine the stop position of a moveable part whilst maintaining a non-contacting condition and without utilising frictional force caused through mechanical contact.

In one proposed method, when the moveable part reaches a specified stop position, a first travelling magnetic field generation coil provided at the side of the guide rail generates a travelling magnetic field travelling in the opposite direction to the direction of travel of the movable part, and meanwhile a second travelling magnetic field generation coil provided at the side of the guide rail generates a travelling magnetic field in the opposite direction to the direction of the travelling magnetic field generated by the first travelling magnetic field generation coil. That is, the stop position is determined by applying equal travelling magnetic fields, to the travelling movable part, in mutually opposing directions. (This method is disclosed, for example, in "The Engineer in Wonderland", E.R. Laithwaite, 1967).

However, this method also has the following disadvantages. First, it is a difficult task, requiring great delicacy, to select the timing of application of the two travelling magnetic fields to the movable material. Second, the forces generated by these two travelling magnetic fields must be strictly equal. Third, even when, as is necessary, a magnetic circuit has been designed so that equal forces are provided by the two travelling magnetic fields, the forces may easily be unbalanced due to external factors. Fourth, current must be continuously supplied to the two travelling magnetic field generation coils when the movable part is being held at the stop position, and therefore a large amount of power is consumed, making operation uneconomical. Fifth, the movable part is likely to vibrate between the two travelling magnetic field generation coils and in such a case the movable part is not in a true stationary condition. Sixth, the structure required is inevitably complicated.

GB—A—1 102 321 discloses position control apparatus for an electrically conductive sheet. The apparatus employs two opposed-pole pairs. Two a.c. windings are provided which are linked each to two poles, one from each opposed-pole pair. At least one opposed-pole pair is provided with means causing a phase shift of flux along the faces of the poles of the pair. The conductive sheet moves in the gaps between the pole faces of the pairs. The two opposed-pole pairs develop opposing forces on the sheet when the sheet extends between the poles of one pair and into the gap of the other pair such that there is provided a range of positions of the edge of the sheet for which the sheet can be maintained in a stable position.

According to the present invention there is provided an induction type positioning system, having a structure comprising a main pole, an auxiliary pole magnetically connected to the main pole, and single phase AC magnetic field generation means operable to cause the main pole to generate a higher magnetic field than the auxiliary pole, and having a conductive member, relative movement between the said structure and the conductive member being possible, the said poles and generation means being operable to develop a force between the said structure and the conductive member, for relative positioning and/or movement control, for example stop positioning, control of linear movement, control of rotary movement, control of floating movement, by the induction of a first eddy current, in the conductive member, by a magnetic field generated by the main pole, and the induction of a second eddy current, in the conductive member, by a magnetic field generated by the auxiliary pole, the force so developed having a zero cross point occurring for one relative disposition of an edge and the body of the conductive member with respect to the said poles, so that for relative dispositions slightly to opposite sides of the zero cross point the force acts, in opposite directions, towards the said one relative disposition.

An embodiment of the present invention can provide an induction type stop and holding system which is capable of accurately stopping and holding a movable part, without the need for contacting parts, and capable of continuously holding the movable part at a predetermined position, with a simple structure.

Such an embodiment of the present invention can be provided through an induction type positioning system comprising a primary core consisting of a main pole installed with a single phase AC magnetic field generation coil (hereinafter referred to as the single phase coil) and an auxiliary pole connected thereto, and a conductive plate which moves relatively to this primary core. Thereby, there is generated a holding force for suppressing relative movement between the primary core and the conductive plate by means of eddy currents induced in the conductive plate by the field generated by the main pole at a disposition at which the conductive plate is positioned against the auxiliary pole and simultaneously an edge of the conductive plate is positioned against the main pole, and eddy currents induced in the conductive plate by the field generated from the auxiliary pole.

According to an embodiment of the present invention, a conductive plate can be accurately stopped at a predetermined position by generating two kinds of eddy current in the conductive plate by means of a magnetic circuit consisting of a single-phase coil and a pair of poles. Thereby, the structure required is very simple and can ensure a stable stopping and holding operation.

An embodiment of the present invention can provide an induction type stop and holding system through an induction type positioning system which is suitable for employment in various kinds of automatic control systems, physical distribution systems, and material carrying systems etc.

Reference is made, by way of example, to the accompanying drawings, in which:—

Figure 1 is a schematic diagram for assistance in explanation of the operating principle of an embodiment of the present invention,

Figures 2 and 3 are respective schematic diagrams for illustrating eddy currents generated in operation of an embodiment of the present invention,

Figure 4 is another schematic diagram for further assistance in explanation of operating principles of an embodiment of the present invention,

Figure 5 is a graphical representation of force versus displacement,

Figure 6 is a schematic side or end-on view of an embodiment of the present invention,

Figure 7 is a view from above of the embodiment of Figure 6,

Figures 8 and 9 are respective graphical representations, to different scales, of force versus displacement,

Figure 10 is a schematic circuit diagram of a drive circuit of an embodiment of the present invention,

Figure 11 is a view from above of a second embodiment of the present invention,

Figure 12 is a schematic wiring diagram illustrating wiring employed in the second embodiment,

Figure 13 is a circuit diagram of the drive circuit employed in the second embodiment,

Figure 14 is a sectional view of a third embodiment of the present invention,

Figure 15 is a view from above of the third embodiment of the present invention,

Figure 16 is a view, similar to that of Figure 15, of a fourth embodiment of the present invention,

Figure 17 is a view, similar to that of Figure 15, of a fifth embodiment of the present invention,

Figure 18 is a view from above of a sixth embodiment of the present invention,

Figure 19 is a circuit diagram of a drive circuit of the embodiment of Figure 18,

Figure 20 is a view from above of a seventh embodiment of the present invention,

Figure 21 is a view from above of an eighth embodiment of the present invention,

Figures 22 to 27 illustrate other embodiments of the present invention,

Figures 28 and 29 illustrate an example of the application of the principle of the present invention, and

Figure 30 illustrates another example of the application of the principle of the present invention.

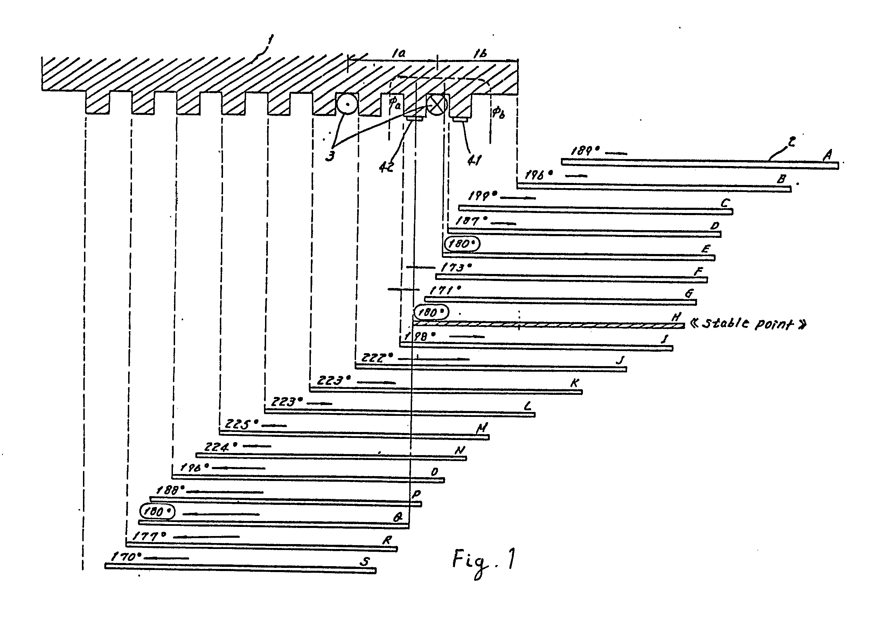

Figure 1 illustrates the operating principle of an induction type positioning system embodying the present invention. In Figure 1, 1 is a fixed primary core, 2 is a secondary conductor of a predetermined length consisting of a good conductor material such as aluminium or copper, 3 is a single-phase coil would on a part of the primary core 1. In addition, 41 and 42 are Hall effect elements; elements 41 and 42 are respectively provided on two teeth of the primary core 1, as seen in Figure 1, and detect a phase difference between magnetic fluxes in an area 1a forming a main pole of primary core 1 and an area 1b forming an auxiliary pole thereof.

The arrow marks in the Figure indicate the directions and intensities of forces applied to the whole of the conducting plate 2 on the secondary side.

Operations will be explained below.

When a current is supplied to the single-phase coil 3 from a single phase AC power source (not illustrated), a magnetic flux loop ($\phi$a, $\phi$b) as indicated by a broken line in the Figure is formed. Since an AC magnetic field is formed, an AC magnetic flux is also obtained. Here, the phase of magnetic flux $\phi$a at the main pole 1a leads the magnetic flux $\phi$b at the auxiliary pole 1b by 180°.

When the secondary conductor 2 is proceeding from the right hand side of the Figure towards the primary core having such a magnetic circuit structure, a force directed to the right works on the secondary conductor 2 at the position indicated by A in the Figure. (This force is disclosed in United States Patent No. 3,735,162 entitled "Single coil linear motor"). At this time, a phase difference between magnetic fluxes $\phi$a and $\phi$b of 180° is indicated in the outputs from the pair of Hall effect elements 41 and 42.

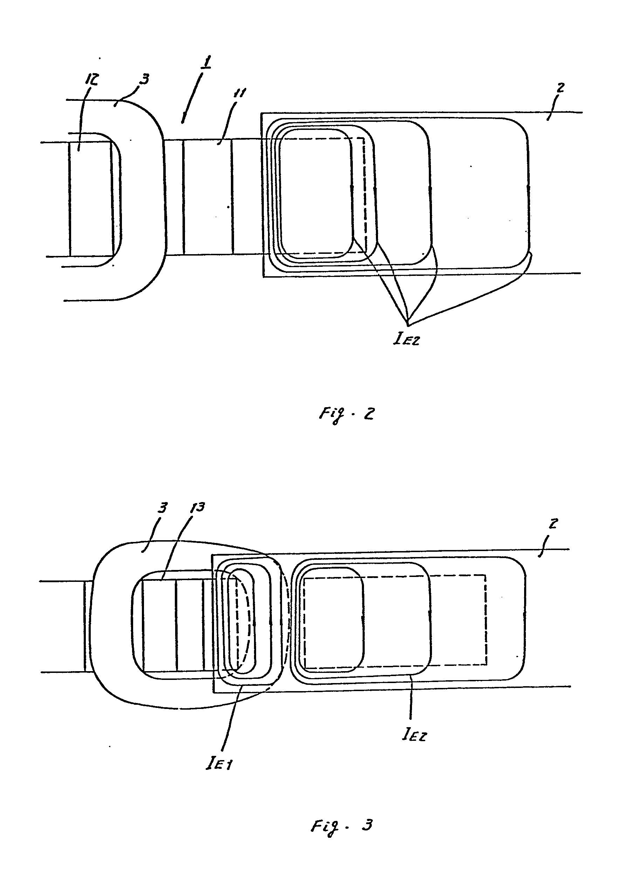

Namely, at first, it is as if the secondary conductor 2 did not exist, and the phase difference between the magnetic fluxes $\phi$a and

φb is 180°. However, whenever the secondary conductor 2 comes closer to the primary core 1, the phase difference between magnetic fluxes φa and φb becomes larger, and the phase of magnetic flux φb on the side of auxiliary pole 1b lags more and more behind the phase of flux φa. This is because an eddy current $I_{E2}$ is generated by the magnetic flux φb at the edge of the secondary conductor 2 as it enters the core. Figure 2 illustrates the condition of an eddy current $I_{E2}$ which flows in the secondary conductor 2. Here, as the secondary conductor 2 proceeds further and sequentially reaches the position indicated by B in Figure 1 and then the position indicated by C in Figure 1, the eddy circuit $I_{E2}$ induced in the secondary conductor 2 reaches a maximum due to the effects of flux φb caused by the auxiliary pole 1b. As a result, the lag of flux φa as against the phase of φb reaches a maximum and phase difference between them reaches 199°. Therefore, the force directed to the right reaches a maximum in the secondary conductor plate 2 as indicated by the arrow in position C.

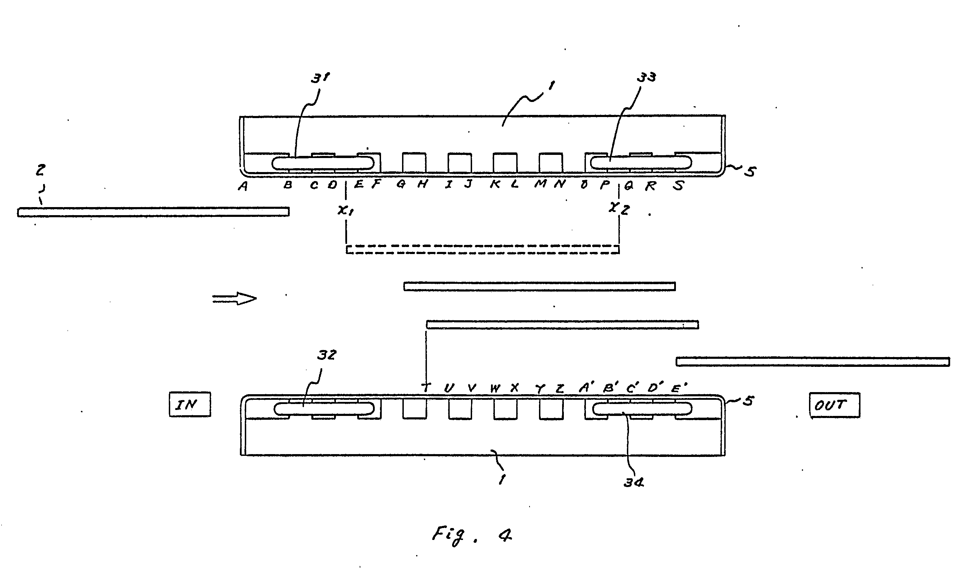

When the secondary conductor 2 proceeds further and reaches the position indicated by D, the end point of the secondary conductor 2 starts to suffer the effects of φa caused by the main pole. Since the magnetic flux φa crosses the secondary conductor 2, an eddy current $I_{E1}$ starts to flow in the secondary conductor, as shown in Figure 3, in the opposite direction to the eddy current $I_{E2}$ which is generated due to crossing of the magnetic flux φb caused by the auxiliary pole 1b. As a result, the phase lag of the flux φb as against the flux φa gradually becomes smaller, and the phase difference between the magnetic fluxes becomes 187° at position D and 180° at position E. The secondary conductor 2 at the position E is not subject to any force in any direction, right or left, as can be understood from Figure 1. However, as will be explained later, the secondary conductor 2 is unstable at the position E, and a certain holding force cannot be obtained.

When the secondary conductor 2 proceeds further to the left and reaches position F, the edge of the secondary conductor 2 suffers further effects of flux φa caused by the main pole 1a. Therefore, eddy current $I_{E1}$ induced in the secondary conductor due to crossing of the magnetic flux φa becomes larger and a phase difference of flux φb as against φa becomes 173°. This tendency becomes more distinct at position G and in this case the phase difference becomes 171°. As a result, the force applied to the secondary conductor 2 is directed to the left as indicated in Figure 1. When the secondary conductor 2 reaches the position H, the phase difference between magnetic fluxes φa and φb is just 180°. At this time, the secondary conductor 2 is at a stable condition because it does not suffer any force at all. When the secondary conductor 2 proceeds further towards the main pole 1a, the phase difference between magnetic fluxes φa and φb exceeds 180° again and it becomes 198° at position I, 222° at position J, and 223° at positions K and L. The forces applied to the secondary conductor in these positions are directed again to the right.

Then, if the secondary conductor is further shifted to the left, the right side edge of the secondary conductor 2 is influenced by the main pole and the auxiliary pole of the primary core. Namely, the secondary conductor 2 again suffers force directed to the left at positions M, N, O, and P. Phase difference between magnetic fluxes φa and φb becomes 180° again at the position Q. However, the secondary conductor does not become stable at this position.

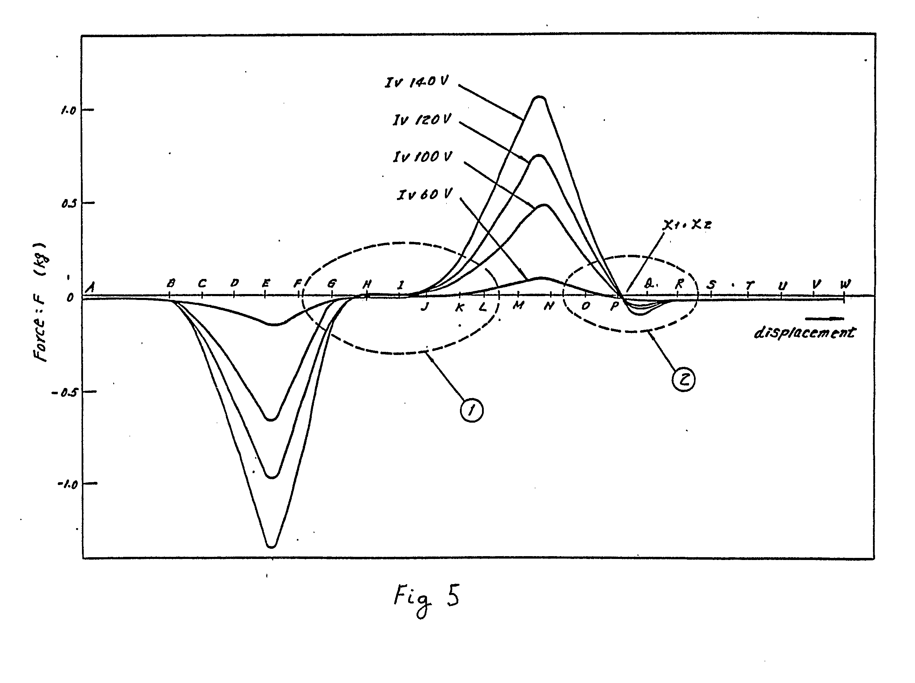

The principle of the present invention will be explained in more detail with reference to Figures 4 and 5.

Figure 4 corresponds in general to Figure 1 and shows relative positional relationships between the primary core 1 and secondary conductor 2. Figure 5 is a graph obtained by sequentially plotting the forces which the secondary conductor experiences for each relative disposition of primary core and secondary conductor when a single phase AC current is applied to coils 31 and 32 in Figure 4.

In this example, the secondary conductor 2 moves from the left to the right against a fixed primary core 1. Moreover, in Figure 4 a pair of primary cores arranged face to face with one another are indicated, but in principle only one primary core provided on one single side is sufficient. Moreover, in Figure 4, the primary cores are shown considerably separated for convenience, but in reality the gap between the cores is narrow. In Figure 4, 5 is a non-magnetic and insulating protection cover. In Figure 5, force F (kgf) which is generated on the secondary conductor 2 is represented on the vertical axis, whilst the physical displacement of the secondary conductor relative to the primary core is represented on the horizontal axis.

In addition, letters A to W in Figure 5 indicate relative displacements corresponding to the letters A to W alongside the primary core 1 in Figure 4. The letters used in this example do not correspond to the letters A to S as used in Figure 1.

In Figure 4, when the rightmost edge of the secondary conductor 2, which secondary conductor is proceeding from the left, is positioned at a region to the left of position I, the rightmost edge of the secondary conductor suffers the influence of magnetic fluxes caused by the main pole and auxiliary pole of the primary core. When the rightmost edge is to the right of position I, the leftmost edge of the secondary conductor 2 suffers the influence of the magnetic fluxes caused by the main pole and the auxiliary pole of the primary core.

Figure 5 illustrates the direction and intensity of force which the rightmost edge of the secondary conductor receives at respective positions when the secondary conductor passes through regions near the primary core 1.

In other words, in Figure 5, when the right side edge of the secondary conductor is at the position E, force F, directed to the left, is at a maximum. Thereafter, this force F is gradually reduced and the force F becomes zero at positions H and I.

When the secondary conductor 2 proceeds further to the right, the left side edge of the secondary conductor is then effected by both poles, and a force F directed to the right is applied to the secondary conductor, based on the principles explained in Figures 1 to 3. The force directed to the right becomes a maximum when the right side edge reaches the positions M and N.

When the secondary conductor 2 moves further to the right, the force F directed to the right, gradually becomes weaker. When the right side edge reaches a position between P and Q such force becomes zero momentarily. At the next moment, an opposing force, namely a force F directed to the left is applied to the secondary conductor 2. The present invention proposes a method of stopping and holding a secondary conductor 2, which is moving, by fully utilising the fact that the force suffered by the secondary conductor 2 undergoes a sharp zero cross point at a predetermined position.

The zero cross point of the force corresponds to the positions indicated by the symbols $x_1$, $x_2$ in Figure 4 and Figure 5. Namely, when the secondary conductor 2 reaches the position (corresponding to the position H in Figure 1) indicated by the broken line outline of 2 in Figure 4, it suffers a force F which is converging to $x_1$ in Figure 4 at its left side edge (which force urges the left side edge to location $x_1$). This force F is composed of a force which is applied to the position P (corresponding to the positions I, J, K, L in Figure 1) from the position N in Figure 5 (the force is experienced between P and N) and directed to the right, and a force which is applied to the position Q (corresponding to the positions F, G in Figure 1) from the position P (the force is experienced between P and Q) and directed to the left.

The amplitude of this force is proportional to the square of the value of current applied to the coils 31 and 32, and as input voltage $I_V$ is increased, the force F converged to the positions $x_1$, $x_2$ is further strengthened, as illustrated in Figure 5.

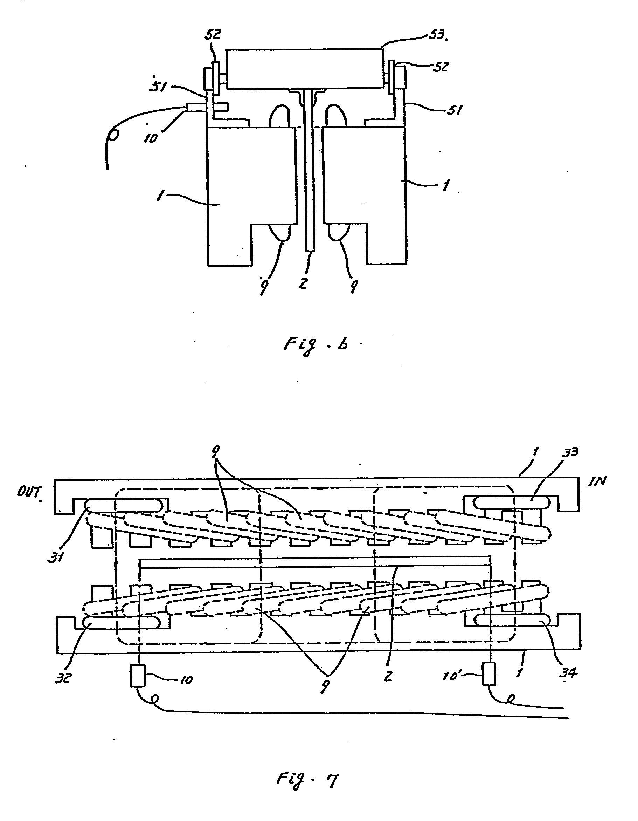

A first embodiment of the present invention, wherein the principle of the present invention is adopted to a linear induction motor, will be explained with reference to Figures 6 to 10.

Figure 6 is a side view and Figure 7 is a top view.

In each of Figures 6 and 7, 9 indicates travelling magnetic field generation coils wound on respective poles of a primary core 1,1 arranged on opposite sides of a secondary conductor 2; 10,10' are light detectors each consisting of a light source and a light sensor for detecting the position of a secondary conductor 2; 51 is a guide rail provided continuously on the primary core as shown in Figure 4; 52 is a wheel which can run freely on the guide rail 51; 53 is a carrier connected to the secondary conductor 2.

The positioning system of this embodiment of the present invention allows, as can be understood from Figure 7, that the length of the secondary conductor 2 is set shorter than the length of the primary core 1,1.

A pair of single-phase coils 31,33 (32,34) for stop and holding which are installed onto the primary core 1,1 are arranged with a spacing almost equal to the length of the secondary conductor 2. In other words, as explained with reference to Figure 1, the single phase coils 31,33 (32,34) are arranged in such respective positions that when the secondary conductor reaches a position corresponding to position H in Figure 1 a travelling magnetic field is not effective on the secondary conductor 2, namely in positions where right and left directed forces become zero. The single phase coils 31 to 34 are so wired that a flux loop is indicated by broken lines in Figure 7 is generated.

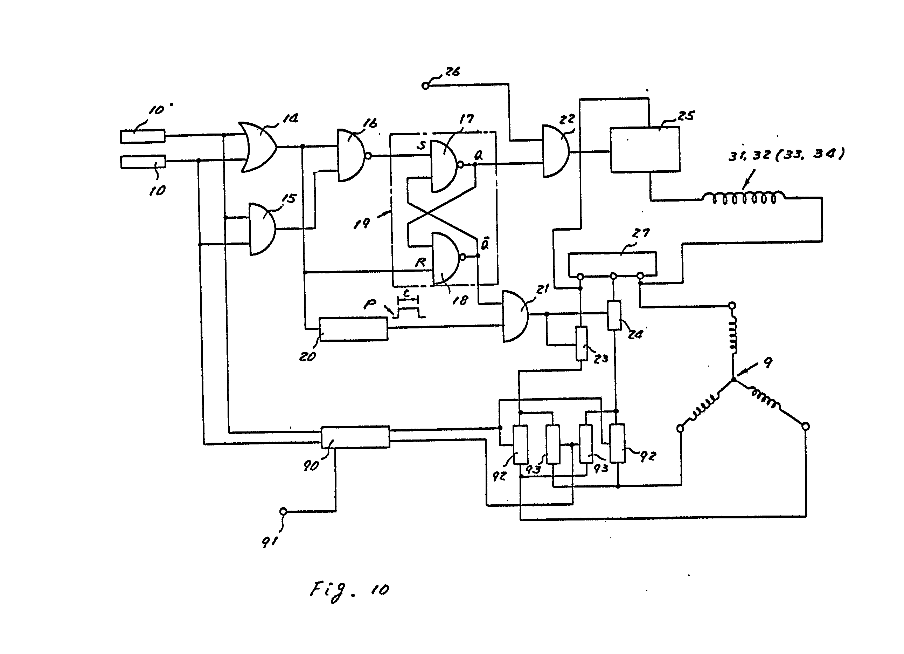

Moreover, the light detectors 10,10' are provided at locations corresponding to positions between positions D and E in Figure 4 or with an interval which is equal to the length of secondary conductor 2 or shorter than such length by a specified amount, and the light detectors 10,10' are respectively connected to the drive circuit of Figure 10 as explained below.

Operations of this embodiment of the present invention will be explained in sequence. First there will be explained a method of stopping and holding the secondary conductor 2 in a case in which the secondary conductor 2 makes an entry from inlet side IN in Figure 7.

When the edge of secondary conductor 2 crosses the detector 10', power is supplied to the travelling magnetic field generation coils 9 in such a direction that a braking force is applied to the secondary conductor 2. Power feeding time is determined to be of such a length that the direction in which the secondary conductor 2 is running is not changed, by advance adjustment of the travelling magnetic field generation coil drive circuit.

When the secondary conductor 2 proceeds further and the detector 10 detects its edge, a single phase voltage is simultaneously applied to single phase coils 31 to 34 at the inlet side IN and at exit side OUT, or only to the single phase coils 31,32 at the exit side OUT. Thereafter, such single phase AC voltage is supplied to the single phase coils 33,34 at the inlet side IN after a delay of a specified period (corresponding to the duration of time for which braking force is applied to the secondary conductor 2 without its direction of travel changing). As a result, the secondary conductor 2 is stopped at a position between the single phase coils 31 to 34 as shown in Figure 7. Under this condition, the edges of secondary conductor 2 stop at positions between D and E and P and Q shown in Figure 4 and no force is applied to the secondary conductor. Thus, the secondary conductor is held in a stable and stationary condition.

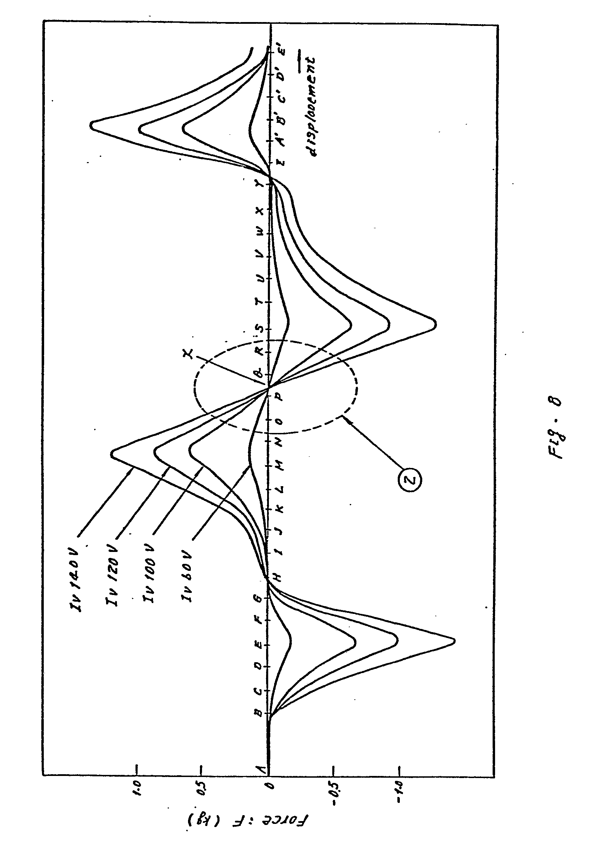

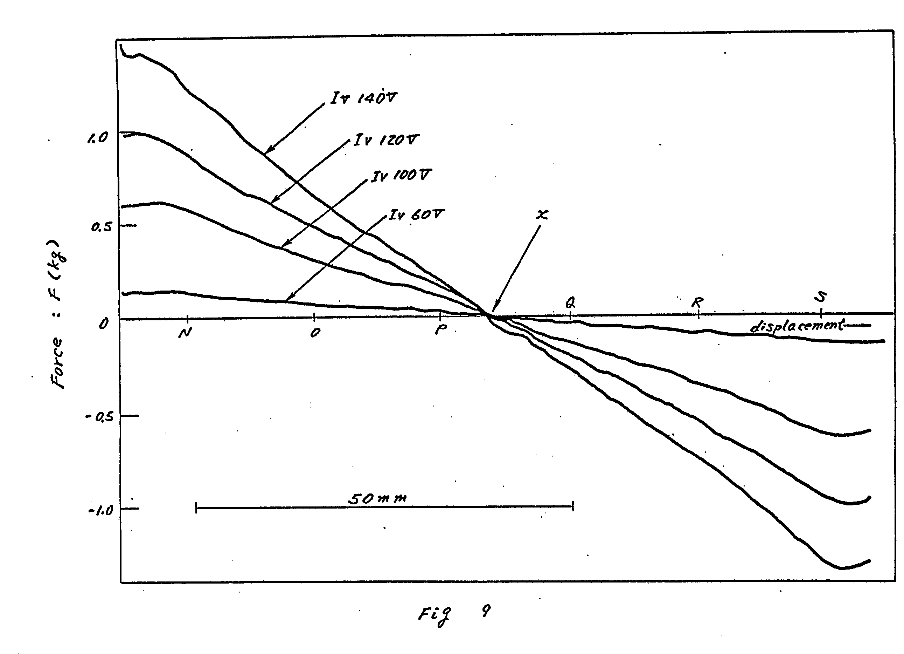

Figure 8 shows the relationship between displacement and force when the single phase coils at both ends are activated. All indications in Figure 8 correspond to those in Figure 5. As will be understood from Figure 8, the waveform shown in Figure 5 is formed somewhat differently in Figure 8, being symmetrical about a position x. This is because two pairs of single phase coils are used in this embodiment and therefore the slope of the waveform is sharper in Figure 8 as compared with x ($x_1$, $x_2$) in the graph shown in Figure 5. Figure 9 is an enlarged illustration of the region around the position x in Figure 8.

When supply of power to the single phase coil is ended and power is supplied to the travelling magnetic field generation coils 9, the secondary conductor 2 can move again in any direction selected.

Figure 10 illustrates one example of a drive circuit for employment with the embodiment of Figures 6 and 7.

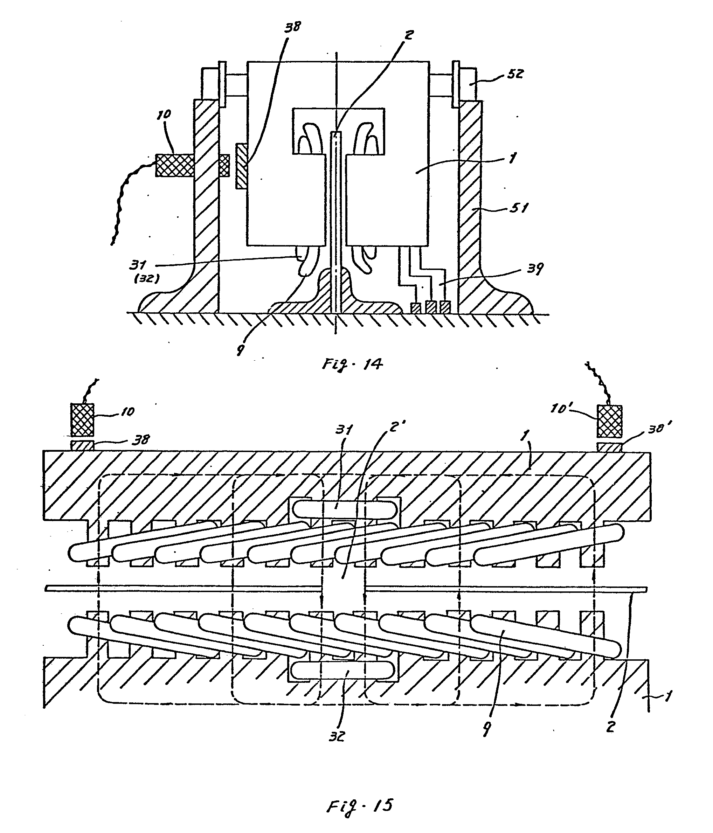

In Figure 10, 14 is an OR circuit; 15,21, 22 are AND circuits; 16,17,18 are NAND circuits, and NAND circuits 17,18 together form a latch circuit.

20 is a one-shot generator, which generates a pulse for designating a braking period, for braking the secondary conductor by means of travelling magnetic field generation coils 9 for a specified period as explained above. 27 is a three-phase AC power supply. 23,24 are relays placed at two output terminals of the three-phase AC power supply 27. 25 is a relay inserted in a series closing circuit of two output terminals of the three-phase AC power supply 27 and single phase coils 31,32 (33,34). 90 is an entry direction discrimination circuit (including a latch circuit) which determines the direction of reversed phase magnetic field to be applied for braking the secondary conductor 2. 92,93 are relays connected to two output terminals extended from the three-phase AC power supply 27. For the light detectors, the single phase coils and the travelling magnetic field generation coils, the numbering of Figure 7 is directly employed.

Figure 10 illustrates an example of a drive circuit as adapted for a carrying system wherein a plurality of positioning systems embodying the present invention are arranged for a (comparatively long) carrying rail having comparative length.

It is assumed that a reciprocal shift method wherein the secondary conductor 2 which forms the movable part can enter the stop and holding system as shown in Figure 7 from any direction is desired to be provided along the carrying rail, and therefore, this drive circuit is configurated, taking into account the reciprocal possible entrances of the secondary conductor into the stop and holding system.

When entry of secondary conductor 2 into the stop and holding system is detected by one of the light detectors 10,10', a detection signal is at first input to the one-shot generator 20. Then, the relays 23, 24 are operated in response to a braking period designation pulse P of which the pulse width t is previously determined via the gate 21. Simultaneously, the entry direction discrimination circuit 90 judges in which direction the reverse phase field should be applied. Thereby any of the relays 92 or 93 is operated for latching. Operation of relays 23, 24 and relays 92 or 93 causes a reversed phase magnetic field, in such a direction as to brake the secondary conductor 2, to be generated for a predetermined period by the travelling magnetic field generation coils 9 in order to brake the secondary conductor 2. When both light detectors 10,10' have detected the entry of secondary conductor 2, a detection signal is input to the latch circuit 19 to operate the relay 25. Then, power is fed to the single phase coils 31, 32 (33,34) and the stop position is determined.

In Figure 10, terminal 26 is an enable terminal which can inhibit an output from the latch circuit 19, through the gate 22, and the operation of relay 25, in order to cause the stop and holding system to allow secondary conductor 2 to pass as desired.

Terminal 91 is a terminal which enables operation of relays 92, 93 in a case in which it is required.

This drive circuit simultaneously drives a pair of single phase coils in dependence upon an output from a light detector. It is alternatively possible to employ a drive circuit which first drives the single phase coil at the exit side OUT of the stop and holding system and then drives the single phase coil at the inlet side IN. In this case, this drive method can be realised very easily by providing a delay circuit or a sequential circuit in the drive circuit.

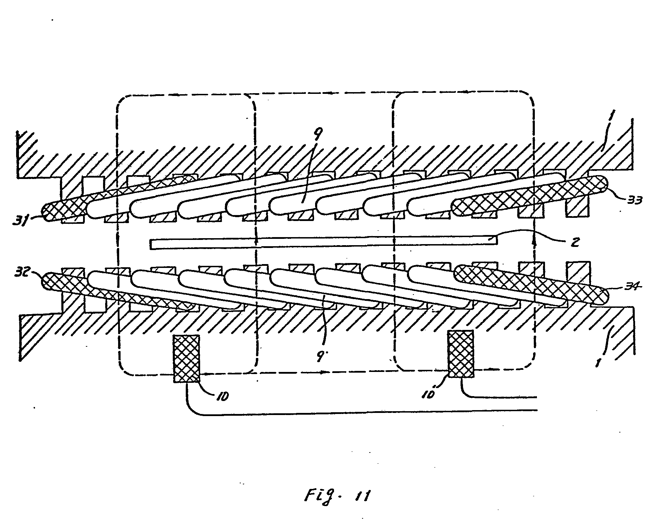

A second induction type stop and holding system embodying the present invention is illustrated with reference to Figures 11 to 13.

In this embodiment, a single phase coil is structured by using a part of the travelling magnetic field generation coil of the embodiment shown in Figure 7.

The embodiment of Figures 11 to 13 provides an advantage in that it is not required to particularly provide or use a single phase coil, as compared with the embodiment of Figures 6 and 7. Since the basic structure of this embodiment is the same as that shown in Figure 7, detailed explanation will be omitted.

The operation of the embodiment of Figures 11 to 13 will be explained below.

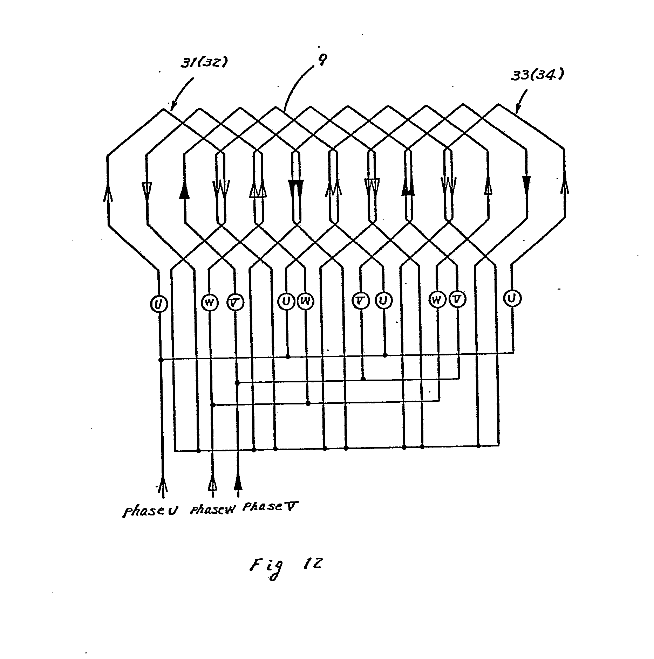

Figure 12 illustrates the wiring pattern of this embodiment of the invention. Reference numerals used in Figure 12 correspond to those used in Figure 11. In addition, three-phase AC power supply is employed for this embodiment of the invention.

Here, it should be noted that the coils wound around the primary core used in this embodiment are connected in parallel to each phase of the power supply. In other words, in the present embodiment, since the stop position of secondary conductor 2 is determined between coils 31,33 (32,34) by feeding single phase AC current at a specified timing to those coils, which coils form a part of the travelling magnetic field generation coils as mentioned above, and which are arranged with a specified spacing, the travelling magnetic field generation coils are necessarily connected in parallel to the power supply of each phase.

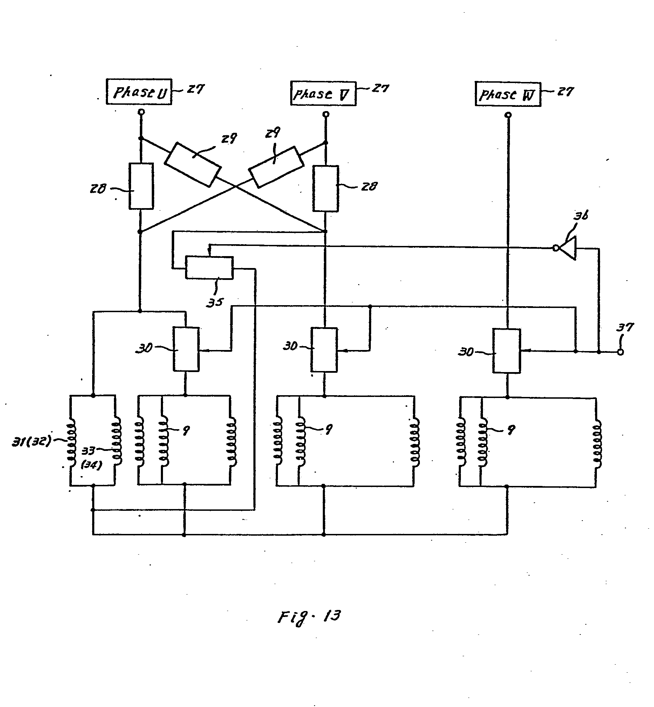

Figure 13 illustrates a drive circuit for the stop and holding system of the embodiments of Figures 11 and 12. In Figure 13, 28,29 are reverse phase supply change-over relays; 30 is a travelling magnetic field generation relay; 35 is a stop position determination relay; 36 is an inverter; 37 is a start/stop input terminal. Other reference numerals correspond to those of Figure 11. The start/stop signal input terminal 37 is connected to the output terminal of a two-input NAND circuit (not illustrated). To inputs of the NAND circuit, outputs from the light detectors 10,10' illustrated in Figure 11 are supplied. Therefore, when data "1" is output from both light detectors 10,10', namely when the secondary conductor 2 reaches the position indicated in Figure 11, an output of the NAND circuit becomes logic "0". Thereby, relay 30 for generating the travelling magnetic field is released and meanwhile the logic "0" closes the stop position determination relay 35 via the inverter 36.

As a result, supply of current to the travelling magnetic field generation coil 9 ceases and, on the other hand, single phase AC current is supplied to the stop and holding coils 31 to 34 arranged with a certain spacing.

Namely, the relay 30 is closed only when the travelling magnetic field is being generated and the relay 35 is closed only when the stop position is determined, through suitable control.

Although it is not illustrated, when one light detector output data "1" namely when the secondary conductor 2 reaches the stop position, the open/close condition change-over for the relays 28,29 is carried out in accordance with an output from the light detector in order to supply a current, of such a direction as to accelerate the braking force on the secondary conductor 2, to the travelling magnetic field generation coil 9. Of course, the reverse phase current application period is previously set to such a length that the running direction of the secondary conductor 2 does not change during that period.

When supply of single phase AC to the coils 31 to 34 ceases the AC current of each phase (of each of three phases) is fed to the travelling magnetic field generation coils 9, the secondary conductor 2 which has been stopped between the coils 31 to 34 can be started again, to move in any desired direction.

In the drive circuit shown in Figure 13, as illustrated in Figure 11, the pitch interval between travelling magnetic field generation and stop position determination coils 31,33 (32,34) is equal to the spacing of an odd number of poles and both coils are of the same phase when used as part of the travelling magnetic field generation coils (in this case, the length of the secondary conductor is shorter than the pitch interval of the coils by 1/2 pole spaces.

When the pitch interval is equal to an even number of poles, the drive method shown employed by the circuit of Figure 13 can be used. However, better results can be obtained by employing a circuit structure such that single phase AC current is supplied to any desired one in order to form a magnetic flux loop as indicated by the broken lines in Figure 11.

However, it is here recommended, with a view to realising a circuit as shown in Figure 13, simply and economically, using a lesser number of circuit elements, to employ a structure such that the pitch interval of the travelling magnetic field generation and positioning coils as shown in Figure 11 is equal to the length of an odd number of poles and moreover such that both coils are in the same phase when used for generating the travelling magnetic field.

According to this embodiment of the invention, such a structure can be realised economically by using a part of the conventional travelling magnetic field generation coil, without providing coils particularly for holding and stop positioning.

Figures 14 and 15 illustrated a third embodiment of the present invention. This embodiment concerns a stop position holding system wherein a conductive plate which acts as a secondary conductor is fixed and a primary core is used as a movable part.

Figure 14 is a side sectional view of the positioning system of this embodiment of the invention, and Figure 15 is an upper sectional view.

In Figures 14 and 15, 1 is a primary core functioning as a movable part; 9 is a travelling magnetic field generation coil wound around the primary core 1; 31 (32) is a single phase coil for positioning; 39 is a power supply part consisting of a power feeding rail and a slide brush; 52 is a wheel which guides and supports the primary core 1; 51 is a carrying rail provided in correspondence to the wheel 52; 2 is a secondary conductor consisting of a non-magnetic conductor material provided in opposition to the primary core 1 and extending with the carrying rail 51. 10 (10') is a light detector provided at a stop station at which stop and holding positioning of the primary core 1 is to take place. 38 is a reflector provided at a position corresponding to the light detector 10 (10') of the primary core 1.

As shown in Figure 15, a travelling magnetic field generation coil 9 is wound around the primary core 1 and moreover a single phase coil 31 (32) for stop positioning is also wound around a part of the core.

In addition, a secondary conductor 2 at the stop station is provided with a cut-away part 2'.

Operation of this embodiment of the present invention will be explained below.

Assuming that the primary core 1 is guided by the carrying rail 51 and enters the stop station from the left side of Figure 15, the left side light detector 10 provided at the stop station detects the reflector 38' provided on the primary core 1. As a result, an output signal of the light detector 10 is input to a drive control circuit (not illustrated) and thereby a current is fed to the travelling magnetic field generation coil 9 in such a direction as to generate a braking force. The current feeding time is of course set to such a duration that the direction of movement of the primary core does not change during the current feeding time. The primary core 1 gradually enters the stop station whilst suffering braking force, and when the light detector 10' detects the right reflector 38' of the primary core 1, single phase AC current is supplied to the centrally-positioned single phase positioning coils 31,32 wound around the primary core 1 from the drive control circuit (not illustrated). Magnetic flux generated from the single phase coils 31,32 for stop positioning is indicated by broken lines in Figure 15. As a result, the primary core 1 is accurately positioned to a position in opposition to the single phase coils 31, 32 at the cut-away part 2' of the secondary conductor 2, in accordance with the principles explained with reference to Figures 1 to 5.

When the primary core 1 enters the stop station from the right side of Figure 15 operations are substantially the same.

After the primary core 1 has stopped at the stop station, supply of single phase AC current to the single phase coils 31,32 for stop positioning may be ended, but it is recommended that supply of current be continued in case the carrying rail has some small inclination.

When the supply of current to the single phase coils 31,32 for positioning is ended and a current is supplied to the travelling magnetic field generation coil 9, in accordance with a desired direction of movement, the primary core 1 which has been stopped at the stop station can be moved again in the desired direction.

Supply of current to the travelling magnetic field generation coil 9 and the positioning single phase coils 31,32 wound around the primary core 1 is realised through power supply part 39 consisting of a power supply rail laid on a base and a slide brush mounted on the primary core 1 working as a movable part.

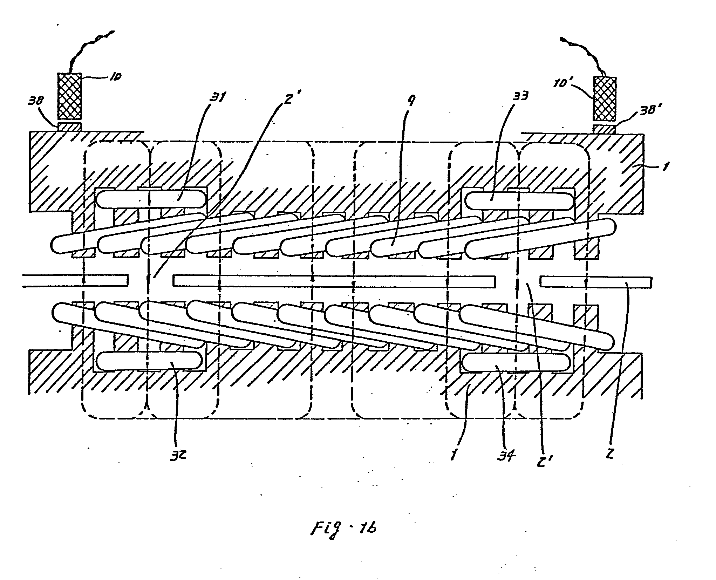

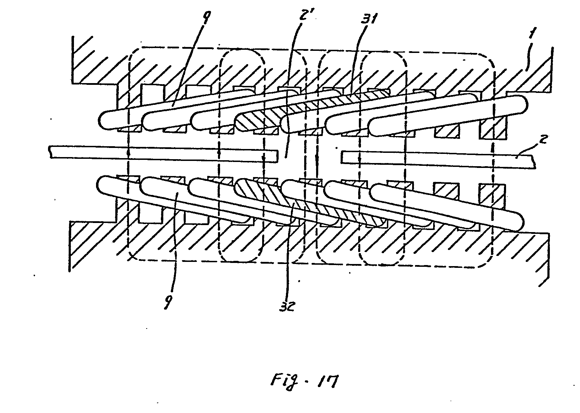

Figure 16 illustrates a fourth embodiment of the present invention. Reference numerals used in Figure 16 correspond to those used in Figure 15.

As will be obvious from Figure 16, a pair of stop station holding coils 31,32 and 33,34 are arranged in a pair of areas at opposite ends of the primary core 1 along the direction of travel of the primary core 1, and cut-away parts 2' are provided in two areas of the secondary conductor 2 at the stop station.

The positioning coils 31,33 (32,34) wound around the primary core 1 are so wired that a magnetic flux loop as indicated by broken lines in Figure 16 is formed when single phase AC current is supplied whilst the primary core is in the stop condition. In addition, coils 31,33 (32,34) are respectively arranged in such a way that their relative positioning between teeth of the primary core 1 on which the coils are wound and the cut-away part 2' provided on the secondary conductor 2 is the same as that shown in Figure 7.

The operation of the Figure 16 embodiment of this invention is the same as that embodiment shown in Figure 15 and therefore detailed explanation will be omitted.

This embodiment of the invention realises positioning of the primary core more accurately and more forcibly than is the case with the embodiment shown in Figure 15.

Figure 17 illustrates a fifth embodiment of the present invention. Reference numerals used in Figure 17 correspond to those used in Figure 15.

The embodiment of Figure 17 is an example of a modification wherein the technology disclosed in connection with the second embodiment of the present invention is combined with the embodiment of Figure 15, and it differs from the embodiment of Figure 15 in that the stop position holding single phase coil wound around the primary core 1 is a unit used in and as a part of the travelling magnetic field generation coil 9.

Although wirings for this embodiment are not indicated, wiring exactly the same as that used for the second embodiment of the present invention can be employed. For such wiring, refer to Figure 12 and Figure 13.

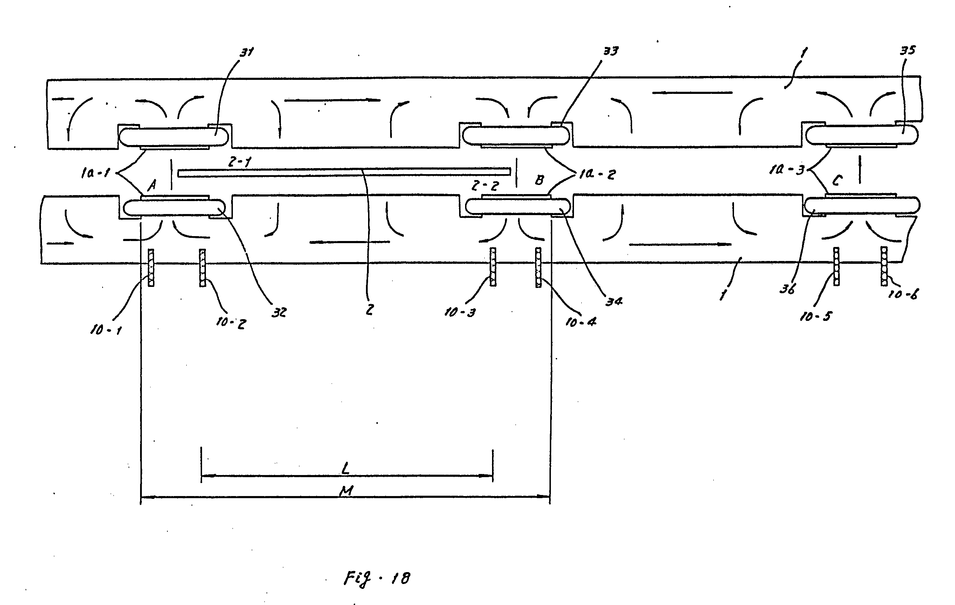

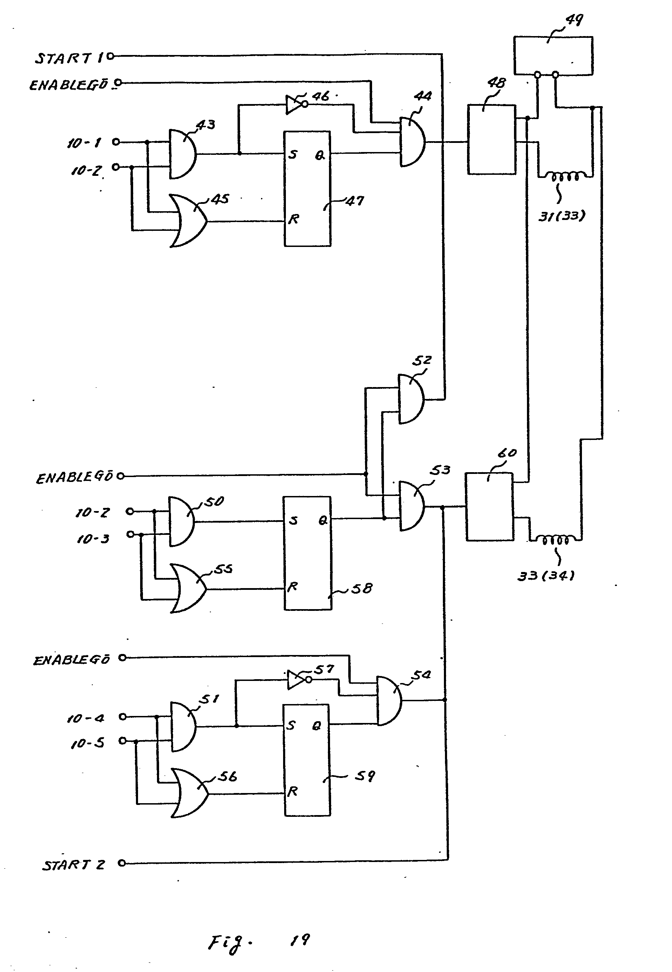

A sixth embodiment of this invention is illustrated in Figures 18 and 19.

This sixth embodiment realises start, shift, stop and holding by making use only of the stop position holding system of the present invention. Namely, the first to fifth embodiments of the present invention explained above pertain to a case in which positioning means is combined with (separate) start and shift means. In the case of this sixth embodiment of the present invention, however, the positioning means is used for start and shift operations.

Figure 18 is a top view of the sixth embodiment. In Figure 18, 1 is a primary core; 1a is a main pole formed on the primary core 1 (main poles are formed at predetermined intervals); 31 to 36 are single phase coils respectively wound around the main poles (31 and 32, 33 and 34, 35 and 36 are respectively wound around main poles 1a-1, 1a-2, 1a-3 arranged face to face respectively and wired so that a magnetic flux loop is formed as indicated by arrow marks in Figure 18). In addition, 2 is a secondary conductor plate; 10-1, 10-3, 10-5 are front end sensors for right direction; 10-2, 10-4, 10-6 are rear end sensors for left direction. These sensors are used for detecting the front end and the rear end of the secondary conductor plate and are provided at regions corresponding to position x in Figure 5. A sensor 10 is formed, for example, of a reflection type light detector.

Here, the length of the secondary conductor 2 in the travelling direction is set to be longer than the distance L between the sensors 10-1, 10-3 provided at positions corresponding to the

positions $x_1$, $x_2$ in Figure 5 and shorter than the distance M between the main poles 1a-1 and 1a-2. Therefore, it is possible to accurately stop the secondary conductor as in the case of the early embodiments of the present invention.

In other words, in the earlier embodiments of the present invention, the single phase coil is used only for secondary conductor (or primary core) stop position holding. The structure of the sixth embodiment of the present invention, however, allows the secondary conductor 2 to be shifted using the same single phase coil.

The operation of this embodiment will be explained by reference to Figures 18 and 19.

We shall consider, as an example, the driving of the secondary conductor 2 in the rightwards direction in Figure 18.

First, the secondary conductor 2 is set by being shifted to the right from the left of the Figure along a rail so that the front end 2-1 of the secondary conductor 2 is positioned between the right direction front end sensor 10-1 and the left direction rear end sensor 10-2. Therefore, an output "O" from the sensor 10-1 and an output "1" from the sensor 10-2 are input to a drive circuit explained below. The drive circuit receives, under these conditions, an enable signal from an operator or highly-ranked equipment and then supplies single phase AC current to the single phase coils 31,32. Moreover, the drive circuit is configured so that it supplies a current (only) to the single phase coils 31,32 only when an output of the sensor 10-1 is "O" and an output of the sensor 10-2 is "1" or an output of the sensor 10-1 is "1" and an output of the sensor 10-2 is "O", namely, when the front end point 2-1 of the secondary conductor is positioned between sensors 10-1 and 10-2.

When a current is supplied to the single phase coils 31,32 from the drive circuit, the magnetic flux indicated by the arrows in Figure 18 is generated from respectively single-phase coils. As a result, the secondary conductor 2 suffers a force in the rightwards direction in accordance with the principles explained with reference to Figures 1 to 5 and shifts on the rail, being guided therewith. Then, the sensors 10-3 and 10-4 detect when the front end 2-1 of the secondary conductor is positioned between the opposing main poles 1a-2 and supplies single phase current to coils 33,34 connected, in the same way, to the drive circuit. As a result, the secondary conductor is further accelerated and is shifted to the right. In the same way, the secondary conductor 2 can be further shifted along the rail.

Shift of the secondary conductor leftwards can be realised in the same manner.

Namely it is required only that the rear end point 2-2 of the secondary conductor is detected by two sensors 10 and that a current is supplied to a single phase coil whilst the rear end point of the secondary conductor is positioned between the two sensors.

Figure 19 shows an example of a drive circuit for connection to the system shown in Figure 18.

In Figure 19, 43,44 and 50 to 54 are AND gates; 45, 55 and 56 are OR gates; 46 and 57 are inverters; 47, 58 and 59 are set/reset type flip-flops; 48 and 60 are solid state relays serially connected to the coils 31 (32), 33 (34).

Outputs of the sensors 10-1, 10-3 are input to the gate 50, and the gate outputs a signal for supplying an AC current to both single phase coils 31 (32), 33 (34) located at the front end and rear end of the secondary conductor 2 when both outputs are "1", namely when the secondary conductor 2 is positioned as indicated in Figure 18. For this reason, when the gate 50 opens and the flip-flop 58 is set, and simultaneously when a negative pulse of an enable signal Enable GO is input, the gates 52, 53 open. Each output of the gates 52,53 turns ON the relays 48, 60. Thereby an AC current is simultaneously supplied to the single phase coils 31(32), 33 (34).

When a current is supplied to two single phase coils, the secondary conductor 2 positioned between the two single phase coils suffers a force directed towards the centre of the secondary conductor from both ends thereof. The secondary conductor 2 is thus held between the single phase coils. When the secondary conductor is in a stationary condition, an AC current is continuously supplied to both single phase coils between which it is held. If supply of current to any one of those single phase coils, located at opposite ends of the secondary conductor 2, is ended, the secondary conductor 2 can be moved again in the direction towards the single phase coil the supply of current to which has ceased. Namely, when it is required to shift the secondary conductor to the left, it is necessary to turn OFF the relay 48 by applying a signal to the start terminal START ONE of Figure 19 and to end the supply of current to the single phase coils 31 (32). In addition, when it is required to shift the secondary conductor 2 to the right, it is necessary to turn OFF the relay 60 by applying a signal to the start terminal START TWO and to end the supply of current to the single phase coils 33 (34).

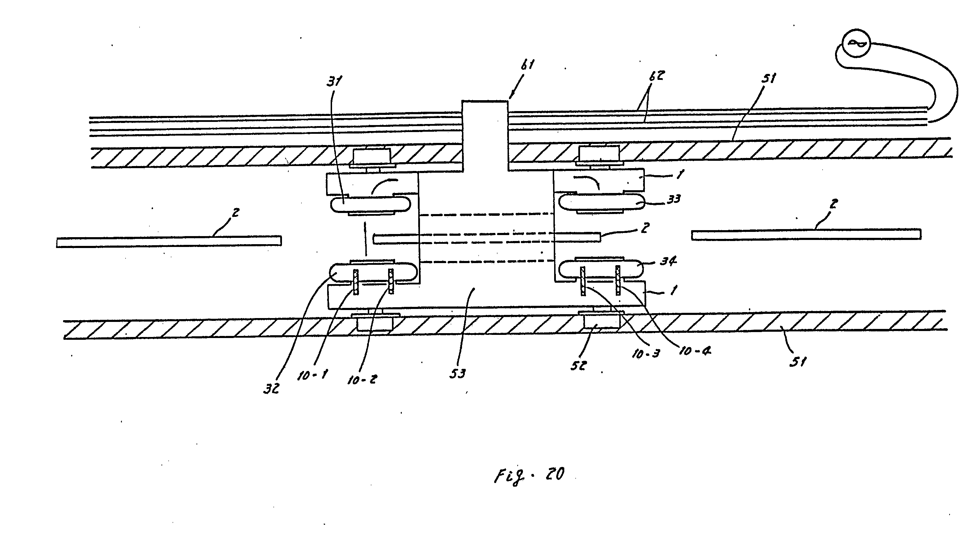

Figure 20 illustrates a seventh embodiment of the present invention.

This embodiment provided an improvement of the embodiment illustrated in Figure 14, wherein the secondary conductor is fixed and the primary core is movable.

In Figure 20, 51 is a (guide) rail; 53 is a carrier; 52 is a wheel provided outside the primary core 1; 61 is a slide brush connected to terminals of single phase coils 31 to 34; 62 is a current supply rail which is laid on a base and connected to single phase AC power supply.

As can be understood from Figure 20, in this embodiment of the invention the secondary conductor 2 is arranged between rails 51 with a predetermined spacing or interval and, on the other hand, the primary core 1 is supported movably on the rails 51 via wheels 52. The primary core 1 has single phase coils 31,32 and 33,34 installed in opposition at its two ends and the distance between the single phase coils 31,

(32) and 33 (34) is set almost equal to the length of secondary conductor 2.

The principle of operation is exactly the same as that of the sixth embodiment of the present invention mentioned above. Namely, the body consisting of the primary core and the carrier can be shifted in a predetermined direction, due to forces as indicated in Figure 5, by selectively applying an AC current to any one of the single phase coil pairs 31,32 or 33,34 wound around the primary core. Supply of an AC current to each single phase coil is carried out via the power supply rail and the brush which is in contact with the rail and slides on the rail. In this embodiment of the present invention, the carrying body can be stopped by simultaneously applying AC current to the single phase coils 31,32, 33,34 at both ends of the primary core. As in the case of the previous embodiment of the present invention.

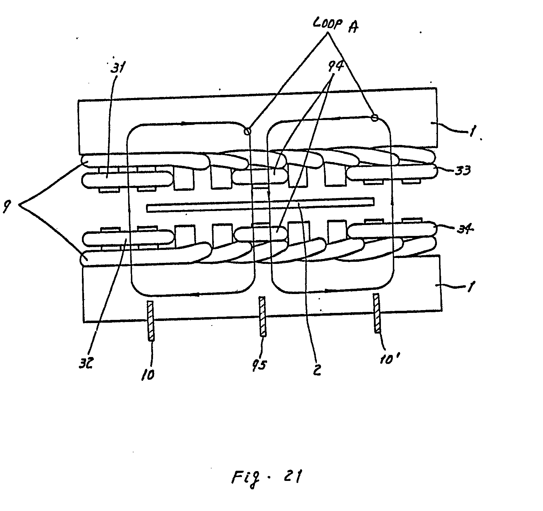

Figure 21 illustrates an eighth embodiment of the present invention. This embodiment offers an improvement over the embodiment of Figure 7. The numbering used in Figure 21 is generally the same as that of Figure 7. In Figure 21, 94 is a coil provided in this embodiment for the supply of a DC current. The coil 94 is located between the single phase coils 31 to 34 and is wired so that it generates a magnetic field as indicated by the loop A in the Figure.

The operation of this embodiment of the present invention will now be explained.

It is assumed that the secondary conductor 2 travels from right to left in Figure 21. At first, the secondary conductor 2 is detected by position sensor 10'. An output of the position sensor 10' is then input to a drive control circuit (not illustrated). Thereby the travelling magnetic field generation coil 9 is activated in reverse and receives a supply of current in such a way that a travelling magnetic field going to the right is generated. Operations up to this point are the same as in the embodiments described above. Then, as the secondary conductor proceeds further to the left, its speed of travel is detected by a speed sensor 95. When the speed of the secondary conductor 2 as detected by the speed sensor is decreased, for example, down to 0.1 m/sec. reverse activation of the travelling magnetic field generation coil 9 is ended. When the front end of the secondary conductor 2 is detected by the sensor 10, a single phase AC current is supplied to all single phase coils 31 to 34 whilst a DC current is supplied to the coil 94 for simultaneous activation. At this time, a strong braking force is applied to the secondary conductor 2 due to DC magnetic field generated by the coil 94. As a result, vibration of the secondary conductor 2, whilst it is stopping, is suppressed, and therefore the secondary conductor can be stopped accurately in a very short period of time.

As explained above, this embodiment of the present invention is capable of accurately stopping and holding in a stop condition a secondary conductor running at a high speed within a very short period of time, simply by adding a DC coil to the single phase coils.

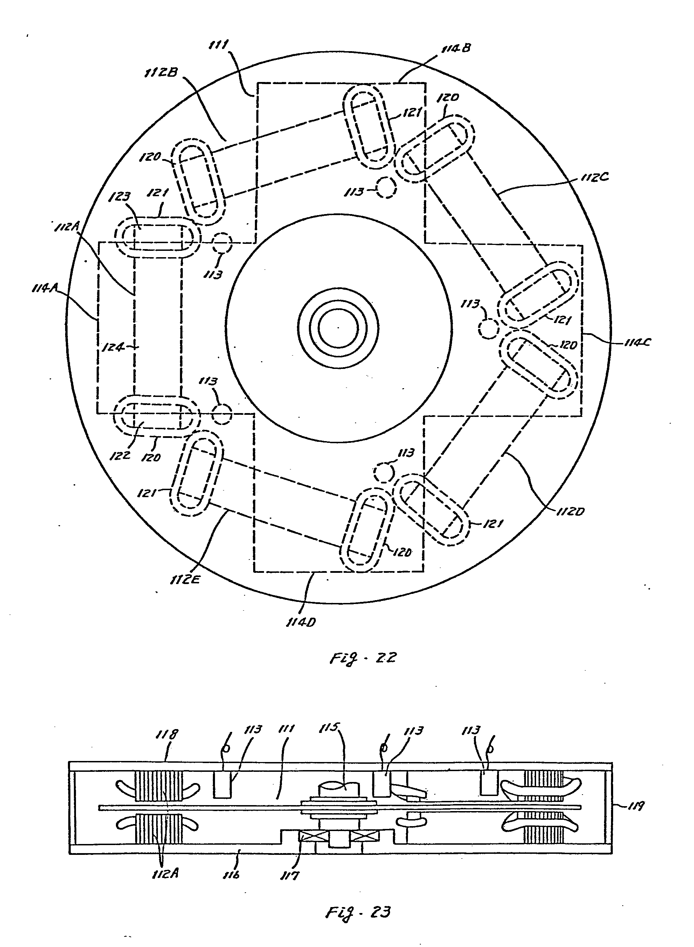

Figures 22 to 25 illustrate a ninth embodiment of the present invention, which is a further modification of the sixth embodiment of the present invention.

This ninth embodiment of the present invention, by skilful use of the principles explained with reference to Figures 1 to 5, provides a single phase induction type stepping motor wherein a rotating body can be stopped at a desired position and can also be held in such a stopped condition, or can be started again in any direction, as desired, from the desired position.

In Figures 22 to 25 111 is a secondary conductor which functions as a rotating plate; 112A, 112B, 112C, 112D, 112E are primary cores; and 113 is a sensor.

The rotating plate 111 is provided with four projecting portions 114A, 114B, 114C, and 114D extending each in a radial direction and spaced at equal intervals circumferentially. The plate 111 is fixed to a shaft 115. The shaft 115 is supported rotatably on a bearing 117, mounted on a fixing plate 116. This rotating plate 111 is formed of a good conductor material, such as aluminium or copper.

The primary cores 112A to 112E are respectively provided in pairs with equal spacings or intervals, sandwiching the projecting portions of the secondary conductor (see Figure 23) around a circumference of the rotating plate 111. A primary core opposing one side of rotating plate 111 is fixed to the fixing plate 116, whilst a primary core opposing the other side of plate 111 is fixed to a fixing plate 118. The fixing plates 116, 118 are coupled by means of a ring-shaped fixing member 119.

Each primary core is respectively provided with single phase coils 120 and 121 at its two ends. The edges 122, 123 indicated representatively for the primary core 112A correspond to the main poles in Figure 1, whilst the intermediate part 124 of core 112A corresponds to the auxiliary pole in Figure 1. In this embodiment of the present invention, the rotating plate 111 is provided with four (an even number of) projections and five (an odd number of) primary cores are used. In general, when odd and even numbers of projections are used, even and odd numbers of cores must respectively be used. The width W of each projection of the rotating plate 111 is determined in such a way that when the centre of the projection matches with the centre of a primary core, the positional relationship between the two sides of the projection of the rotating plate 111 and the primary core is the same as the positional relationship at the position x in Figure 5, as illustrated for projection 114A and primary core 112A in Figure 22.

A total of five sensors are mounted on the fixing plate 118, and the locations thereof are selected so that they correspond to positions x in Figure 5 of the primary cores.

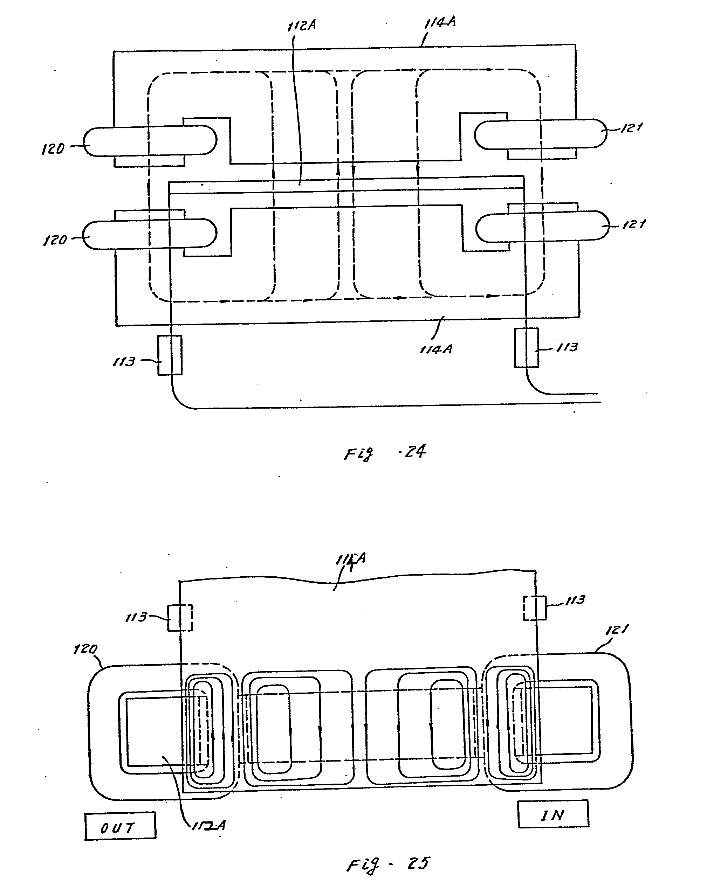

In other words the positional relationship between primary core 112A, projection 114A and sensors 113 in Figure 22 is as shown in Figure 24, and single phase coils at opposite ends of the primary core are so wired that a magnetic circuit is formed as indicated by the broken lines in Figure 24 under these conditions. These single phase coils work, as will be explained later, for starting, stopping and reverse starting the rotating plate 111. When the single phase coils 120, 121 form such a magnetic circuit as is indicated, an eddy current as indicated by arrows in Figure 25 is generated in the secondary conductor functioning as the rotating plate 111.

An example of a drive system for such a single phase AC induction type stepping motor will be explained below.

When the rotating plate 111 stays at the position indicated in Figure 24, the sensor 113 opposing the primary core 112A detects the current position of the rotating plate 111. When the rotating plate 111 is to begin to rotate in a clockwise direction in Figure 24, the rotating plate 111 starts to rotate in a clockwise direction so long as a single phase AC current is supplied for a predetermined period to the single phase coils 120 provided for the primary cores 112B, 112E. When the rotating plate 111 is to turn in the counterclockwise direction, it starts rotating in the counterclockwise direction so long as a single phase AC current is supplied for a predetermined period to the single phase coils 121 provided for the primary cores 112B and 112E.

When the rotating plate 111 begins to rotate in the clockwise direction, if, when a projection of the rotating body appears in opposition to a primary core, at that moment one of the sensors 113 turns from ON to OFF, and that sensor activates, for a desired period, the single phase coils 120 of the primary cores on opposite sides of the opposed primary core, the rotating plate 111 rotates continuously. More specifically, in Figure 24, if, at such a moment that the rear end (lower end) of the projection 114A crosses the lower sensor 113 opposed to the primary core 112A, making that sensor go OFF, single phase AC is applied, for a specified period, for example, as each projection of the rotating plate 111 appears between the primary cores 112B and 112E, to the single phase coils 120 of the primary cores 112B, 112E adjacent to the primary core 112A, the rotating plate 111 continues to rotate in the clockwise direction. Then, if, at a moment at which the rear end of the projection 114A crosses the upper sensor 113, opposed to the primary core 112A, making that sensor go OFF, single phase AC current is applied for a specified period to the single phase coils 120 of the primary cores 112C, 112A on both sides of the primary core 112B from the sensor 113, the rotating plate 111 further rotates in the clockwise direction. Thereafter, the rotating plate 111 continues to rotate in the clockwise direction by repetition of procedures as are explained above.

If it is required to rotate the rotating plate 111 in a counter clockwise direction, it is sufficient to activate the single phase coils 121 instead of the single phase coils 120.

Positioning operation for the rotating plate 111 will now be explained. When the rotating plate 111 is rotating, for example in a clockwise direction, and it is required to stop the projection 114A of plate 111, as shown in Figure 24, at a position opposing primary core 112A, the projection 114A is coming from the side of single phase coil 120 towards the primary core 112A. Therefore, the sensor 113 opposing the single phase coil 120 of the primary core 112A first becomes ON and then sensor 113 opposing the single phase core 121 of the primary core 112A becomes ON. When both sensors become ON, single phase AC current is applied simultaneously to both single phase coils 120, 121 of the primary core 112A, or, alternatively, single phase AC current is first applied to the single phase coil 121 and then to the single phase coil 120 after a certain period, that is after a period over which the rotating plate 111 is decelerated without changing its direction of rotation.

Thereby the rotating plate 111 can be stopped accurately at the position indicated in the Figure.

When the rotating plate is rotating in a counterclockwise direction, such a positioning or stop and position holding operation can be effected by employing sensors 113 and single phase coils 120, 121 in a sequence the reverse of that employed when the rotating plate is to be brought to rest from a state in which it is rotating in a clockwise direction.

In this embodiment of the present invention, a total of twenty stop positions are possible (number of projections on rotating plate 111=4)×(number of primary cores=5)=20.

As explained above, in this embodiment of the present invention, the rotating plate 111, brought to rest at a desired position, can be caused to rotate in a desired direction once more, and can also be stopped at a desired position, with a comparatively simple structure.

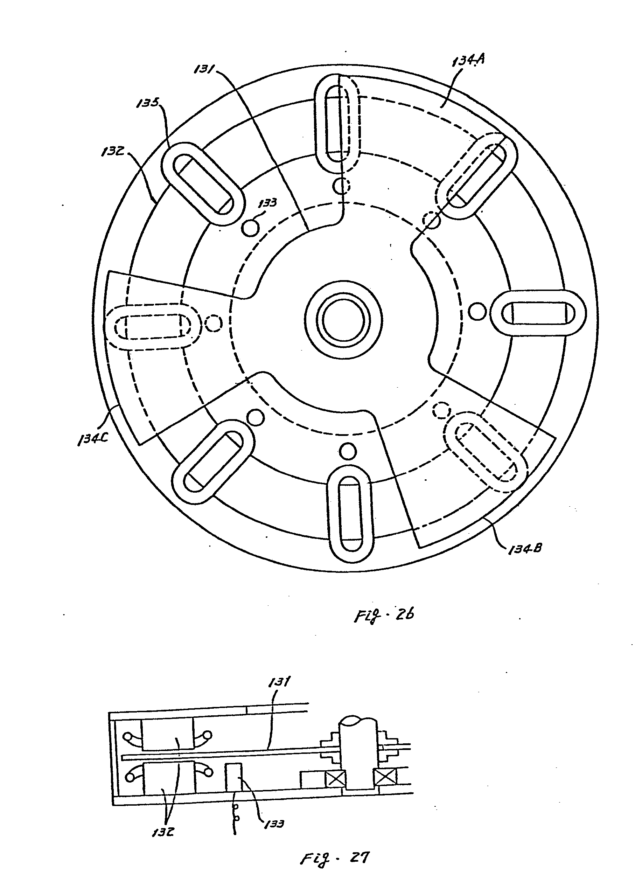

Figures 26 and 27 illustrate another embodiment of the present invention. In these Figures, 131 is a rotating plate; 132 is a primary core; and 133 is a sensor. The rotating plate 131 has three integrally formed projections 134A, 134B and 134C.

The primary core 132 is formed by integrating together eight primary cores in the form of a ring, together with eight single phase coils.

Sensor 113 is provided in opposition to the single phase coil 135 internally thereof.

The operation of the embodiment of Figures 26 and 27 will not be explained because it is substantially the same as that of the previous embodiment. In the case of the embodiment of Figures 26 and 27 a total of twenty four 3×8) positionings and reverse rotations are possible.

According to this embodiment of the present invention, a single phase AC induction stepping motor can be provided which is capable of stopping a rotating body at a desired position and causing the rotating body to recommence rotation from a desired position. Moreover, the structure used is very simple, avoiding the use of a shading coil and a capacitor such as have been required in conventional single phase AC motors.

Further embodiments of the present invention, utilising general principles of the invention as explained above, will now be explained.

In the embodiments of the present invention explained below, the movable part is prevented from floating, or is floated, by employing an adaptation of the principle of the present invention. In this respect the embodiments of the present invention described below differ from those described above in which a movable part is stopped, held, caused to rotate or shifted by means of the interaction between a primary core and a secondary conductor.

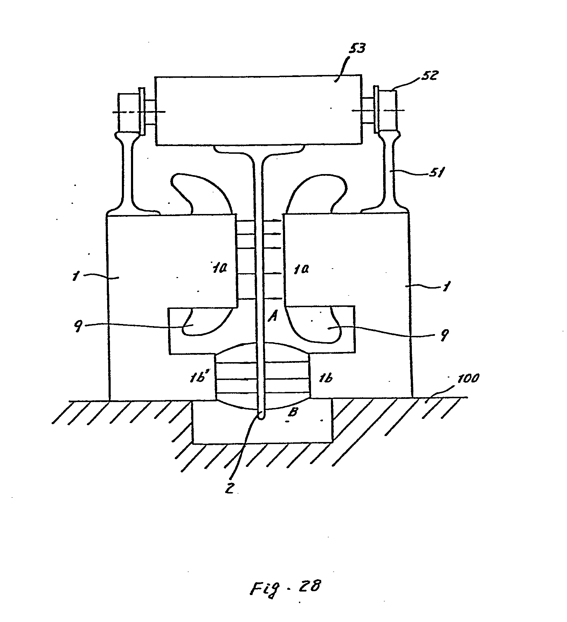

Figure 28 shows an embodiment of the present invention wherein the general principles upon which the present invention is based are employed to provide a means for preventing floating of a movable part.

The basic structure of this embodiment of the present invention is almost the same as that of the embodiment illustrated in Figure 6. Reference numerals in Figure 28 correspond to those in Figure 6, 1a, 1b are the main pole and the auxiliary pole of the primary core respectively. 100 is a base.

As will be understood from Figure 28, in this embodiment, the primary core 1 has main pole 1a and auxiliary pole 1b following one another in a direction (from the top to the bottom in the Figure) which orthogonally crosses the direction in which the secondary conductor 2 runs (which direction extends into and out of the sheet on which the Figure is provided). The main pole 1a and auxiliary pole 1b are arranged in opposition to one another at the surface of the secondary conductor 2. The main pole 1a has a travelling magnetic field generation coil 9 wound thereupon. In addition, the poles of the primary core 1 are respectively arranged in opposing regions on opposite sides of the secondary conductor 2.

The distance between main pole 1a and secondary conductor 2 is less than the distance between auxiliary pole 1b and secondary conductor 2.

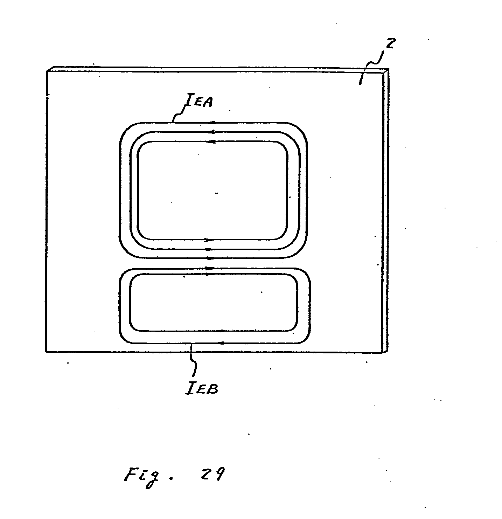

The operation of this embodiment of the present invention will be explained with reference to Figure 29.

First, when three-phase current is fed to the travelling magnetic field generation coil 9, magnetic flux is generated from the poles as indicated by arrows in Figure 28. As explained in relation to the embodiments of the present invention described above, this magnetic flux forms a travelling magnetic field, namely a magnetic field which causes the secondary conductor 2 to move in a direction going into or out of the sheet of paper on which Figure 28 is provided, and simultaneously forms a magnetic circuit loop passing from main pole 1a to primary core 1, auxiliary pole 1b, then opposing primary core 1 and main pole 1a.

In a case in which the secondary conductor 2 does not extend between main poles 1a and auxiliary poles 1b, the phase of magnetic flux passing through the gap A between the main poles leads the phase of the magnetic flux passing through the gap B between the auxiliary poles by 180°.

Distribution of eddy currents induced in the secondary conductor 2 when that secondary conductor plate extends into the gaps between the main poles and the auxiliary poles is illustrated in Figure 29. Figure 29 indicates the secondary conductor 2 as shown in Figure 28 when viewed from the left side. In Figure 29, $I_{EA}$ indicates an eddy current induced in a region in opposition to a main pole 1a, whilst $I_{EB}$ indicates an eddy current induced in a region in opposition to an auxiliary pole 1b.

As will be understood from Figure 28, the gap B is larger than the gap A. Therefore, the permeance of A is larger than that of gap B. As a result, the phase lag of magnetic flux in the gap A becomes larger than the phase lag of magnetic flux in the gap B. That is, the phase of magnetic flux of gap B is leading by 180° as against the gap A.

From this, as will be obvious from Figures 1 to 5, a travelling field directed downwards (that is, a proceeding field directioned to the lower side) is formed at the surface of secondary conductor 2 and therefore a force directed to the lower side is generated.

The secondary conductor 2 generates or experiences a travelling magnetic field along the carrying rail 51 each time a travelling magnetic field generation coil is activated, and similarly generates or experiences a force directed downwards. Thereby, the movable part can effectively be prevented from floating to the upper side (that is prevented from floating upwards).

It is alternatively possible to cause the generation of a force which will urge a movable part to float upwards by means of a further development of the above embodiment of the present invention.

Based on a similar principle, it is possible to apply a floating force to a movable part by forming auxiliary poles 1b in Figure 28 above the main poles 1a, although this is not illustrated. This structure can be used very effectively where the movable part is heavy. That is, the movable part can be shifted stably by means of a low drive force because frictional forces between the wheels of the movable part and the carrying rails can be reduced. Of course, when employing such a structure, the weight of the movable part must be fully taken into consideration so that the floating force is not sufficient to cause the wheels to disengage from the carrying rails.

With reference to the embodiment of Figure 28, the concepts involved in the prevention of the floating of a movable part, or of applying a floating force to a movable part, using a travelling magnetic field generation coil, have been explained. However, it is certain that the same concept can be achieved by additionally providing a single phase AC magnetic field generation coil in the above-mentioned embodiment.

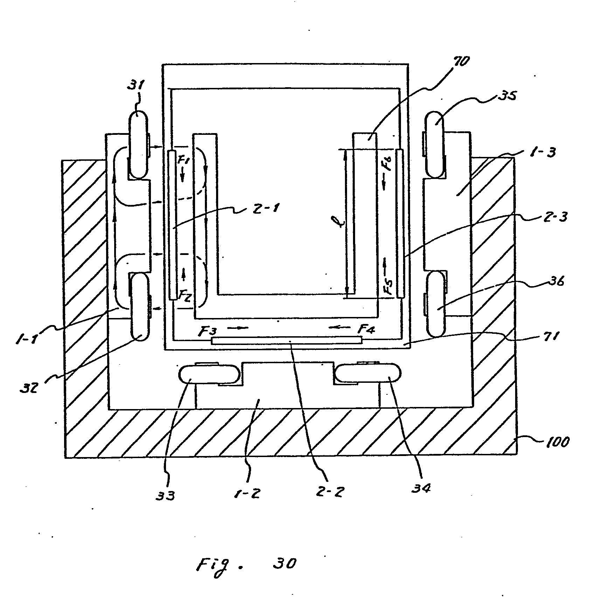

Figure 30 illustrates another embodiment of the present invention, wherein the general principles of the present invention are employed for the generation of a force for floating a movable part.

The embodiment of Figure 30 employs a structure not only for floating the movable part but also for stopping the movable part at a predetermined position on a rail.

In Figure 30, 100 is a U-shaped base of non-magnetic material; 1-1 to 1-3 are primary cores mounted on respective sides of the base 100; 2-1 to 2-3 are secondary conductors arranged in correspondance to the fixed primary cores 1-1 to 1-3; 31 to 36 are single phase coil, for positioning and holding, which are provided at both ends of each of the primary cores 1-1 to 1-3 and which are energised by a single phase AC; 70 is a U-shaped yoke; 71 is a movable part which supports the secondary conductors 2-1 to 2-3 and which is composed of non-magnetic and insulating material. It will be understood that the movable part is intended to move in directions into and out of the plane of the Figure.

As will be clear from Figure 30, the secondary conductors 2-1 to 2-3 are disposed at three sides of the movable part 71 in this embodiment of the present invention, whilst the primary cores 1-1 to 1-3 are arranged in positions corresponding to those of the secondary conductors. Single phase coils 31, 32; 33, 34; and 35, 36 are wound onto the respective primary cores 1-1 to 1-3 at both ends of each primary core. Each single phase coil pair is connected to a single phase power supply so that it can generate a magnetic flux $\phi$. Each secondary conductor has a length I which is a little less than the distance between the centres of the single phase coils of a pair wound around a primary core.

In this structure, when the single phase coils are activated by single-phase AC current, the respective opposing secondary conductors 2-1, 2-2 and 2-3 experience generated forces $F_1$, $F_6$ as indicated by arrows in Figure 30, and thereby the movable part 71 is floated upwards and is accurately positioned at the position indicated in Figure 30.

Namely, since the single phase coils and the edges of the secondary conductors are arranged in advance so that the edges of the secondary conductors are disposed between locations corresponding to the positions $x_1$, $x_2$ in Figure 5, forces directed inwardly from the edges of the secondary conductors are generated, as shown in Figure 30, at the edges of the secondary conductors. A secondary conductor stops stably at a position at which a pair of opposing forces, for example $F_1$ and $F_2$, are balanced.

Moreover, when it is arranged so that the edges of the secondary conductor are just disposed at a position corresponding to position x in Figure 5, namely when they are set in a position where the force $F_1$ generated by the single phase coil 31, and

the force $F_2$ generated by the single phase coil 32, for example, becomes zero, in other words, at a disposition at which the difference between the phases of the magnetic fluxes at the edge of the secondary conductor 2-1 and at the central part of the secondary conductor becomes 180°, the secondary conductor can be positioned more stably. Therefore, in this case, whilst the secondary conductor is disposed at a suitable position, no force is applied to the secondary conductor, on the basis of the principles explained above. If the secondary conductor is displaced, to the right or left, for example, a force is generated in such a direction as to tend to cancel the displacement.

Thus, the movable part 71 carrying the secondary conductors arranged on the three sides thereof can be stopped stably and held at a suitable position without contacting fixed side walls.

It is also possible, in consideration of the weight of the movable part 71, to adjust matters so that upwardly directed force can be generated against the movable part 71. In this case, it is sufficient that the forces $F_2$ and $F_3$ function at a suitable position. For this purpose, the length of L of secondary conductors 2-1, 2-3 is slightly increased, with a view to making slightly larger the forces $F_2$, $F_5$ generated at edges of the secondary conductors by single phase coils 32 and 36. Namely, when $F_2+F_5$=weight of movable part $71+F_1+F_6$, the movable part 71 is stably floated. It is of course possible to provide that $F_1=F_6=0$ by correctly setting the length I of the secondary conductors 2-1, 2-3.

As explained above, embodiment of the present invention can provide a magnetic guide which can stably guide a movable part without the need for any contacting parts, employing only a simple structure.

As mentioned above, embodiments of the present invention can meet the requirements expected to be necessary for realising a physical distribution system or a material carrying system which can effectively prevent the floating of a movable part, or which operates with lesser driving power by floating a movable part by skilful utilisation of the basic principles underlying the present invention.

Thus, the present invention relates to an induction type positioning system. In more detail the present invention is concerned with an induction type positioning system which can accurately stop a movable part, and hold it in a stop position, without relying upon physical contact to achieve this end.

With a view to accurately stopping and holding a movable part at a specified position, whilst maintaining a no-contact condition, and without depending upon frictional force provided by mechanical contact with for example, a movable part for running at high speed on a carrier rail, such as a linear motor car, an embodiment of the present invention is provided with a primary core having a main pole having installed thereon a single phase AC magnetic field generation coil, and an auxiliary pole connected thereto, and a conductive plate which moves relatively to the primary core. Thereby, a holding force, for suppressing relative movement between the primary core and the conductive plate, is generated by means of eddy currents induced in the conductive plate by the field generated by the main pole at the position at which the conductive plate is placed on the auxiliary pole and simultaneously the edge of the conductive plate is placed on the main pole, and the eddy current induced on the conductive plate by the field generated by the auxiliary pole.

The employment of an embodiment of the present invention can provide the realisation of a positioning system having a braking mechanism more simple than that of a positioning system which relies upon mechanical friction as conventionally employed in various kinds of automatic control systems, physical distribution systems, and material carrying systems etc. The use of an embodiment of the present invention can avoid the generation of frictional heating and is not accompanied by smell, smoke or noise.

Thus, embodiments of the present invention can provide worthwhile advantages when adapted to material carrying systems for example to be installed within an office.

**Claims**

1. An induction type positioning system, having a structure (1) comprising a main pole (1a), an auxiliary pole (1b) magnetically connected to the main pole, and single phase AC magnetic field generation means (3, 31 to 34, 31 to 36, 120, 121, 135, 9) operable to cause the main pole (1a) to generate a higher magnetic field than the auxiliary pole (1b), and having a conductive member (2, 111, 131, 2-1, 2-2, 2-3), relative movement between the said structure and the conductive member being possible, the said poles and generation means being operable to develop a force between the said structure and the conductive member, for relative positioning and/or movement control, for example stop positioning, control of linear movement, control of rotary movement, control of floating movement, by the induction of a first eddy current, (IE1, IEA) in the conductive member, by a magnetic field generated by the main pole, and the induction of a second eddy current, (IE2, IEB) in the conductive member, by a magnetic field generated by the auxiliary pole, the force so developed having a zero cross point occurring for one relative disposition of an edge of the body of the conductive member with respect to the said poles, so that for relative dispositions slightly to opposite sides of the zero cross point the force acts, in opposite directions, towards the said one relative disposition.

2. A system as claimed in claim 1, wherein the single phase AC magnetic field generation means (3, 31 to 34, 31 to 36, 120, 121, 135) comprise a single phase AC coil installed on the main pole (1a).

3. A system as claimed in claim 1, wherein the single phase AC magnetic field generation means is a single phase coil which is operable to form, for example alternatively, a part of a three-phase AC magnetic field generation coil (9), provided for causing relative movement between the conductive member (2) and the structure (1).

4. A system as claimed in claim 1, 2 or 3, wherein the said structure (1) is fixed and the conductive member (2) is movably supported, and the said edge is formed by cutting away a part (2') of the conductive member.

5. A system as claimed in claim 1, 2 or 3, wherein the conductive member (2) is fixed and the said structure (1) is movably supported, and the said edge is formed by cutting away a part of the conductive member (Figure 20).

6. A system as claimed in any preceding claim, wherein auxiliary pole (1b) has an area of surface opposing the conductive member (2) spaced further apart from the member than an area of surface of the main pole (1a) opposing the conductive member (Figure 28).

7. A system as claimed in any preceding claim, wherein the auxiliary pole is spaced apart from the main pole.

8. A system as claimed in any preceding claim excluding claim 5, wherein a pair of such structures are arranged at respective positions spaced by an interval which is almost equal to or greater than the length, of the movably supported conductive member (2), or the spacing between two edges of the conductive member, in its direction of running.

9. A system as claimed in claim 8, wherein the conductive member (2) is provided with the said two edges by cutting away parts (2') of the conductive member at two positions, the edges being provided so that they can approximately oppose the respective main poles of the two structures of the said pair.

**Patentansprüche**

1. Positionierungssystem von Induktionstyp, das einen Aufbau (1) aufweist, der einen Hauptpol (1a) umfaßt, und einen Hilfspol (1b), der magnetisch mit dem Hauptpol verbunden ist, und eine Generatoreinrichtung für ein einphasiges magnetisches Wechselfeld (3, 31 bis 34, 31 bis 36, 120, 121, 135, 9), die im Betrieb verursachen kann, daß der Hauptpol (1a) ein höheres Magnetfeld als der Hilfspol (1b) erzeugt, und mit einem leitenden Teil (2, 111, 131, 2-1, 2-2, 2-3), wobei eine relative Bewegung zwischen dem genannten Aufbau und dem leitenden Teil möglich ist, die genannten Pole und die Generatoreinrichtung betreibbar sind, um eine Kraft zwischen dem genannten Aufbau und dem leitenden Teil zu entwickeln, zur relativen Positionierung und/oder Bewegungssteuerung, z. B. zur Stop-Positionierung, Steuerung der linearen Bewegung, Steuerung der Drehbewegung, Steuerung einer schwimmenden Bewegung, durch Induktion eines ersten Wirbelstroms (IE1, IEA) in dem leitenden Teil, durch ein Magnetfeld, welches durch den Hauptol erzeugt wird, und die Induktion des zweiten Wirbelstroms, (IE2, IEB) in dem leitenden Teil, durch ein Magnetfeld, welches von dem Hilfspol erzeugt wird, wobei die so entwickelte Kraft einen Nulldurchgangspunkt hat, der für eine relative Verschiebung einer Kante des Körpers des leitenden Teils bezüglich der genannten Pole so eintritt, daß für leichte relative Verschiebungen zu entgegengesetzen Seiten des Nulldurchganspunktes die Kraft in entgegengesetzte Richtung, zu der genannten einen relativen Verschiebung wirkt.

2. System nach Anspruch 1, bei welchem eine Generatoreinrichtung für ein einphasiges magnetisches Wechselfeld (3, 31 bis 34, 31 bis 36, 120, 121, 135) eine einphasige Wechselspule umfaßt, die auf dem Hauptpol (1a) installiert ist.

3. System nach Anspruch 1, bei welchem die Generatoreinrichtung für das einphasige magnetische Wechselfeld eine Einphasenspule ist, welche betätigt werden kann, um z. B. alternativ einen Teil einer dreiphasigen Generatorspule (9) für ein magnetisches Wechselfeld zu bilden, die vorgesehen ist, um eine relative Bewegung zwischen dem leitenden Teil (2) und dem Aufbau (1) zu verurschen.

4. System nach Anspruch 1, 2 oder 3, bei welchem der genannte Aufbau (1) fixiert ist und das leitende Teil (2) bewegbar gestützt ist und die genannte Kante durch Wegschneiden eines Teils (2') des leitenden Teils gebildet ist.

5. System nach Anspruch 1, 2 oder 3, bei welchem das leitende Teil (2) fixiert ist und der genannte Aufbau (1) bewegbar unterstützt ist und die genannte Kante durch Wegschneiden eines Teils des leitenden Teils (Figur 20) gebildet ist.

6. System nach einem der vorhergehenden Ansprüche, bei welchem der Hilfspol (1b) einen dem leitenden Teil zugewandten Oberflächenbereich aufweist, der weiter entfernt von dem Teil ist, als ein Bereich der Oberfläche des Hauptpols (1a), der dem leitenden Teil (Figur 28) zugewandt ist.

7. System nach einem der vorhergehenden Ansprüche, bei welchem der Hilfspol einen Abstand zu dem Hauptol aufweist.

8. System nach einem der vorhergehenden Ansprüche, mit Ausnahme von Anspruch 5, bei welchem ein Paar von solchen Aufbauten so an entsprechenden Positionen mit einem Intervallabstand angeordnet ist, welcher fast gleiche oder größer als die Länge des beweglich unterstützten leitenden Teils (2) oder der Abstand zwischen zwei Kanten des leitenden Teils in seiner Bewegungsrichtung ist.

9. System nach Anspruch 8, bei welchem das leitende Teil (2) die genannten beiden Kanten durch Wegschneiden von Teilen (2') des leitenden Teils an zwei Positionen aufweist, wobei die Kanten so vorgesehen sind, daß sie etwa gegenüber den entsprechenden Hauptpolen der beiden Aufbauten des genannten Paares angeordnet sind.

## Revendications

1. Système de positionnement du type à induction, comportant une structure (1) comprenant un pôle principal (1a), un pôle auxiliaire (1b) couplé magnétiquement avec le pôle principal et un dispositif générateur de champ magnétique alternatif monophasé (3, 31 à 34, 31 à 36, 120, 121, 135, 9) fonctionnant pour que le pôle principal (1a) développe un champ magnétique supérieur à celui du pôle auxiliaire (1b) et comportant une pièce conductrice (2, 111, 131, 2-1, 2-2, 2-3), un mouvement relatif entre ladite structure et la pièce conductrice étant possible, lesdits pôles et le dispositif générateur ayant pour fonction de développer une force entre ladite structure et la pièce conductrice pour une commande de positionnement relatif et/ou de mouvement, par example un positionnement d'arrêt, une commande de mouvement linéaire, une commande de mouvement tournant, une commande de mouvement flottant, par l'induction de premiers courants de Foucault (IE1, IEA) dans le pièce conductrice par un champ magnétique développé par le pôle principal et l'induction de seconds courants de Foucault (IE2, IEB) dans la pièce conductrice par un champ magnétique développé par le pôle auxiliaire, la force ainsi développée présentant un point de passage par zéro apparaissant pour une disposition relative d'un bord du corps de matière conductrice par rapport auxdits pôles de manière que pour des dispositions relatives légèrement sur les côtés opposés du point de passage par zéro, la force s'exerce dans des sens opposés vers ladite disposition relative.

2. Système selon la revendication 1, dans lequel le dispositif générateur de champ magnétique alternatif monophasé (3, 31 à 34, 31 à 36, 120, 121, 135) consiste en une bobine alternative monophasée montée sur la pôle principal (1a).

3. Système selon la revendication 1, dans lequel le dispositif générateur de champ magnétique alternatif monophase est une bobine monophasé qui fonctionne de manière à former, par exemple alternativement, une partie d'une bobine (9) génératrice de champ magnétique alternatif triphasé produit pour provoquer un mouvement relatif entre la pièce conductrice (2) et la structure (1).

4. Système selon la revendication 1, 2 ou 3 dans lequel ladite structure (1) est fixe et la pièce conductrice (2) est supportée de façon mobile, ledit bord étant formé par un découpage d'une partie (2') de la pièce conductrice.

5. Système selon la revendication 1, 2 ou 3, dans lequel la pièce conductrice (2) est fixe et ladite structure (1) est supportée de façon mobile, ledit bord étant formé par un découpage dans une partie de la pièce conductrice (Figure 20).

6. Système selon l'une quelconque des revendications précédentes, dans lequel un pôle auxiliaire (1b) a une surface opposée à la pièce conductrice (2) plus espacée de la pièce que la surface du pôle principal (1a) opposé à la pièce conductrice (Figure 28).

7. Système selon l'une quelconque des revendications précédentes, dans lequel le pôle auxiliaire est espacé du pôle principal.

8. Système selon l'une quelconque des revendications précédentes, à l'exclusion de la revendication 5, dans lequel une paire desdites structures est disposée dans des positions respectives espacées d'un intervalle qui est presque égal ou supérieur à la longueur de la pièce conductrice (2) supportée de façon mobile, ou un espace entre deux bords de la pièce conductrice dans sa direction de déplacement.

9. Système selon la revendication 8, dans lequel la pièce conductrice 2 est prévue avec les deux bords par des parties découpées (2') de la pièce conductrice dans deux positions, les bords étant prévus de manière qu'ils puissent se trouver approximativement en face des pôles principaux positifs des deux structures de ladite paire.

Fig. 1

1a 1b

φa φb

3
42
41

189° ─── A
196° ─── B
199° ─── C
187° ─── D
(180°) ─── E
173° ─── F
171° ─── G
(180°) ─── H «stable point»
198° ─── I
222° ─── J
223° ─── K
223° ─── L
225° ─── M
224° ─── N
196° ─── O
188° ─── P
(180°) ─── Q
177° ─── R
170° ─── S

0 041 846

Fig. 2

Fig. 3

Fig. 4

A  B  C  D  E  F  G  H  I  J  K  L  M  N  O  P  Q  R  S

$X_1$     $X_2$

$T$  $U$  $V$  $W$  $X$  $Y$  $Z$  $A'$  $B'$  $C'$  $D'$  $E'$

IN

OUT

31  1  33  5

2

32  5  34  1

0 041 846

Fig 5

Fig.6

Fig.7

Fig. 8

Fig 9

0 041 846

Fig. 10

Fig. 11

31(32)　　　　9　　　　　　33(34)

Phase U　Phase W　Phase V

Fig 12

Fig. 13

Fig · 14

Fig · 15

Fig · 16

Fig. 17

Fig. 18

Fig. 19

Fig. 20

Fig. 21

Fig · 22

Fig · 23

Fig. 24

Fig. 25

Fig. 26

Fig. 27

Fig. 28

Fig. 29

Fig. 30